(19) **Europäisches Patentamt / European Patent Office / Office européen des brevets**

(11) **EP 4 692 733 A1**

(12) **EUROPEAN PATENT APPLICATION**
published in accordance with Art. 153(4) EPC

(43) Date of publication:
**11.02.2026 Bulletin 2026/07**

(21) Application number: **24934007.6**

(22) Date of filing: **09.12.2024**

(51) International Patent Classification (IPC):
**G01D 5/245** (2006.01)    **G01D 5/244** (2006.01)

(52) Cooperative Patent Classification (CPC):
**G01D 5/244; G01D 5/245**

(86) International application number:
**PCT/JP2024/043404**

(87) International publication number:
**WO 2025/210960 (09.10.2025 Gazette 2025/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.04.2024 JP 2024060973
29.08.2024 PCT/JP2024/030971**

(71) Applicant: **Oriental Motor Co., Ltd.
Tokyo 111-0056 (JP)**

(72) Inventors:
• **HOUDA, Akihiko
Tsukuba-shi, Ibaraki 300-2635 (JP)**
• **SOMEYA, Masayuki
Tsukuba-shi, Ibaraki 300-2635 (JP)**

(74) Representative: **Witte, Weller & Partner
Patentanwälte mbB
Postfach 10 54 62
70047 Stuttgart (DE)**

(54) **MULTI-ROTATION ANGLE DETECTION DEVICE**

(57)    A multiturn angle detection device includes: a segment counter to generate a count value by counting segments defined by dividing the single-turn cycle of a rotating body into two in an angular range over the single turn of the rotating body; a precision absolute angle detector to generate an absolute angle detection value within the single-turn cycle at a higher resolution; and an arithmetic device to generate a multiturn absolute angle detection value by combining the count value with the absolute angle detection value. The segment counter includes a power generation sensor, a magnetic field generation source, a sensor element, and a nonvolatile memory to store the count value and information identifiable of pulse information. The pulse information includes a sensor element output state and a voltage pulse polarity. The magnetic field generation source applies a two-cycle alternating magnetic field per each turn axially of the magnetic wire. The arithmetic device performs computation for the combining by using the count value and the information identifiable of the pulse information stored in the nonvolatile memory when receiving external electric power supply.

FIG. 1

**EP 4 692 733 A1**

# EP 4 692 733 A1

**Description**

RELATED APPLICATION

This application claims the benefit of priority to Japanese Patent Application No. 2024-060973 filed on April 4, 2024 and International Patent Application PCT/JP2024/30971 filed on August 29, 2024, the disclosure of which is entirely incorporated herein by reference.

TECHNICAL FIELD

The present invention relates to a multiturn angle detection device employing a power generation sensor. More specifically, the present invention relates to a device that detects a multiturn absolute angle over a single turn by combining the count value of a segment counter employing the power generation sensor with an angle detection value obtained from an angle detector capable of precisely detecting an absolute angle based on a single turn cycle.

BACKGROUND ART

Magnetic wires having a large Barkhausen effect (large Barkhausen jump) are known in the name of Wiegand wire or pulse wire. Such a magnetic wire includes a core portion, and a shell portion provided around the core portion. One of the core portion and the shell portion is a soft (magnetically soft) layer in which its magnetization direction is reversed even by application of a weak magnetic field, and the other of the core portion and the shell portion is a hard (magnetically hard) layer in which its magnetization direction is reversed only by application of a strong magnetic field. A power generation sensor is produced by winding a coil around the magnetic wire.

When the hard layer and the soft layer are magnetized in the same direction axially of the wire and the strength of an external magnetic field applied in a direction opposite to that magnetization direction is increased to a certain magnetic field strength, the magnetization direction of the soft layer is reversed. The reversal of the magnetization direction starts at a certain position of the magnetic wire to propagate to the entire wire, whereby the magnetization direction of the soft layer is totally reversed. At this time, the large Barkhausen effect is exhibited to induce a pulse signal in the coil wound around the magnetic wire. When the external magnetic field strength is further increased to another certain magnetic field strength, the magnetization direction of the hard layer is reversed.

The magnetic field strength at which the magnetization direction of the soft layer is reversed is herein referred to as "operational magnetic field" and the magnetic field strength at which the magnetization direction of the hard layer is reversed is herein referred to as "stabilization magnetic field."

A voltage outputted from the coil is characteristically constant irrespective of the change rate of an input magnetic field (external magnetic field), and is free from chattering because of its hysteresis with respect to the input magnetic field. For this reason, the pulse signal outputted from the coil is used in a position detection device and the like.

Where an alternating magnetic field is applied to the power generation sensor, two pulse signals including one positive pulse signal and one negative pulse signal are generated per each cycle. Magnets are used as a magnetic field generation source, and the alternating magnetic field is applied to the power generation sensor by relative movement of the magnets and the power generation sensor. Thus, a position can be detected by counting generated pulse signals.

Since the output from the coil has electric power, a sensor of power generation type (power generation sensor) requiring no external electric power supply can be provided. That is, a peripheral circuit can also be operated by an energy outputted from the coil without the external electric power supply.

An angle sensor such as an absolute encoder is intrinsically incapable of detecting an angle over a single turn. As long as the electric power is supplied, an angle of one or more turns can be detected by summing up movement amounts. If the power supply is cut off, however, information about the one or more turns is lost.

On the other hand, a segment counter employing the power generation sensor can utilize the energy outputted from the coil even if the external electric power supply is cut off. Therefore, the segment counter can continue the counting to detect one or more turns or multiple turns. In general, however, the segment counter employing the power generation sensor can only roughly detect the angle. Where the segment counter is used for motor control requiring precise angle detection, therefore, a precise multiturn angle detection value (multiturn absolute angle detection value) is utilized, which is determined by combining the count value of the segment counter with the angle detection value of a separate precision absolute angle detector.

PTL 1, PTL 2 and PTL 3 disclose methods and devices each adapted to combine the count value of the segment counter with the angle detection value of the precision absolute angle detector.

PTL 1 utilizes a segment counter including three power generation sensors disposed at positions with a phase difference of 60 degrees.

When the direction of the movement is changed, the movement direction cannot be identified only based on the output of a single power generation sensor. Where a plurality of power generation sensors are used, therefore, the movement direction can be identified by using phase differences among the outputs of the respective power generation sensors.

In order to output a voltage pulse from each of the power generation sensors, it is necessary to reverse the magnetization direction of only the soft layer from a state such that the magnetization directions of the hard layer and the soft layer of the magnetic wire are consistent. Even if the magnetization direction of only the soft layer is reversed in a state such that the magnetization directions of the hard layer and the soft layer are inconsistent, no pulse signal is generated or a pulse signal having a very small amplitude is generated.

Where the rotor is continuously rotated in one direction, the magnetic field reaches the stabilization magnetic field at a certain timing after reaching the operational magnetic field to output a voltage pulse before reaching the operational magnetic field again. Therefore, a voltage pulse is certainly generated at an angle position at which the operational magnetic field is reached.

Where the rotor is rotated in both directions (i.e., the rotation direction is changed), however, the power generation sensor is liable to fail to output a voltage pulse (i.e., so-called pulse missing is liable to occur) even if the operational magnetic field is reached. Specifically, no voltage pulse is outputted, even if the magnetic field once reaches the operational magnetic field to output a voltage pulse and then reaches the operational magnetic field again with the rotation direction reversed before reaching the stabilization magnetic field. This is because the magnetization directions of the hard layer and the soft layer are inconsistent.

With the provision of the plurality of power generation sensors at the positions with a phase difference, the rotation direction can be identified by using the phase differences among the output pulses of the power generation sensors. Even with the use of two power generation sensors, however, the rotation direction cannot be identified, if the pulse missing occurs in either of the power generation sensors. Therefore, as disclosed in PTL 1, it is necessary to use the three power generation sensors. In PTL 1, the three power generation sensors are arranged with a phase difference of 60 degrees to combine the count value of the segment counter with the detection value of the precision position detector and to correct an offset of the origin.

However, the use of the plurality of power generation sensors increases the size and the costs of the position detector.

PTL 2 and PTL 3 each disclose a segment counter that determines a rotation direction by processing the pulse signal of a single power generation sensor and the output signal of a sensor element different from the power generation sensor, and performs a counting operation according to the result of the determination. Even in this case, the pulse missing causes inconvenience when the count value of the segment counter and the detection value of the precision position detector are combined with each other. In PTL 2 and PTL 3, therefore, the magnetization state of the magnetic wire of the power generation sensor is monitored, and the value of the segment counter is corrected for a missing voltage pulse according to the magnetization state. Thus, the count value of the segment counter and the detection value of the precision position detector are synchronized and combined with each other.

Specifically, an electric current flowing through the coil of the power generation sensor is gradually increased, and a magnetic field generated by the coil is applied to the magnetic wire for the monitoring of the magnetization state as disclosed in PTL 2 and PTL 3. Thereby, whether or not the magnetization direction of the magnetic wire is reversed is monitored by observing a voltage appearing between the opposite ends of the coil. Thus, the magnetization state of the magnetic wire can be checked.

However, PTL 2 and PTL 3 each require a complicated signal processing operation for the determination of the magnetization direction of the magnetic wire and for the correction of the count value based on the result of the determination. This correspondingly makes it difficult to reduce the size and the costs of the device.

CITATION LIST

PATENT LITERATURE

PTL 1: JP 6226811
PTL 2: JP 5730809
PTL 3: JP 2024-14598 A

SUMMARY OF INVENTION

PROBLEMS TO BE SOLVED BY INVENTION

One example embodiment of the present invention provides a multiturn angle detection device that is advantageous for the size reduction and the cost reduction thereof.

More specifically, an example embodiment of the present invention provides a multiturn angle detection device that can generate a multiturn absolute angle detection value by combining the count value of a segment counter not employing a plurality of power generation sensors with the angle detection value of a precision absolute angle detector without the need for complicated signal processing.

SOLUTION TO PROBLEMS

1. One example embodiment of the present invention provides a multiturn angle detection device which generates the multiturn absolute angle detection value of a rotating body that is rotated about a rotation axis. The multiturn angle detection device includes a segment counter to generate a count value according to the rotation of the rotating body by counting segments defined by dividing (typically equally dividing) the single-turn cycle of the rotating body into two in an angular range over the single turn of the rotating body. The multiturn angle detection device includes a precision absolute angle detector that is operative with external electric power supply and is to generate an absolute angle detection value within the single-turn cycle of the rotating body at a resolution higher than the segments. The multiturn angle detection device includes an arithmetic device that is operative with the external electric power supply and is to generate the multiturn absolute angle detection value of the rotating body by combining the count value of the segment counter with the absolute angle detection value of the precision absolute angle detector. The segment counter includes: a single (sole) power generation sensor; a magnetic field generation source to be rotated together with the rotating body about the rotation axis; a sensor element provided separately from the power generation sensor and adapted to assume either one of a first output state and a second output state depending on the rotational position of the rotating body (typically, a sensor element other than the power generation sensor); and a nonvolatile memory that stores the count value. The power generation sensor includes a magnetic wire that exhibits a large Barkhausen effect, and a coil wound around the magnetic wire. The magnetic field generation source applies a two-cycle alternating magnetic field per each turn of the rotating body axially of the magnetic wire as the rotating body is rotated, and the power generation sensor correspondingly generates four voltage pulses per each turn of the rotating body.

The segment counter is operative with the energy of the voltage pulses generated by the power generation sensor without receiving an external electric power supply. When the power generation sensor generates a voltage pulse, the segment counter identifies the rotation direction and the rotational position of the rotating body based on pulse information indicating the output state of the sensor element and the polarity of the voltage pulse generated by the power generation sensor, and stores information identifiable of the pulse information in the nonvolatile memory. When the power generation sensor generates a voltage pulse, the segment counter updates the count value by using the pulse information and information identifiable of pulse information obtained at preceding voltage pulse generation, and stores the updated count value in the nonvolatile memory.

The segment counter updates the count value by incrementing (counting up) the count value if the pulse information is different from the pulse information obtained at the preceding voltage pulse generation when the power generation sensor generates a voltage pulse of a first polarity with the sensor element in the first output state, and by decrementing (counting down) the count value if the pulse information is different from the pulse information obtained at the preceding voltage pulse generation when the power generation sensor generates a voltage pulse of a second polarity with the sensor element in the first output state. Thus, the segment counter performs a counting operation twice per each turn of the rotating body.

If a count value update failure occurs in which the count value is not updated due to the influence of voltage pulse missing caused by the reversal of the rotation direction when the sensor element is in the second output state, the segment counter corrects the count value for compensation for the count value update failure.

The arithmetic device uses the count value and the information identifiable of the pulse information stored in the nonvolatile memory to combine the count value of the segment counter with the absolute angle detection value of the precision absolute angle detector when receiving the external electric power supply, and generates the multiturn absolute angle detection value of the rotating body.

When the absolute angle detection value belongs to either one of two predefined angular ranges each including a rotational position at which the voltage pulse is generated with the sensor element in the second output state, and the absolute angle detection value and the count value to be combined with each other are inconsistent, the arithmetic device determines a correcting direction based on a preceding voltage pulse polarity determined from the information identifiable of the pulse information to perform a correcting process.

With this arrangement, the magnetic field generation source applies the two-cycle alternating magnetic field per each turn axially of the magnetic wire, whereby the power generation sensor generates four voltage pulses per each turn. The segment counter generates the count value by counting the segments defined by dividing the single-turn cycle into two. Specifically, the segment counter performs the basic counting operation when the sensor element is in the first output state, i.e., performs the counting-up operation in response to the voltage pulse of the first polarity, and performs the counting-down operation in response to the voltage pulse of the second polarity. If the voltage pulse is generated but the pulse information (the voltage pulse polarity and the sensor element output state) is the same as that obtained at the preceding voltage pulse generation, the count value is not updated. When the sensor element is in the second output state, an exceptional counting operation is performed. That is, the count value correcting operation is performed only when the voltage pulse missing (pulse missing) occurs due to the reversal of the rotation direction to thereby fail to update the count value.

Since the segment counter of two segments performs the counting operation every 0.5 turn, a multiturn angle value corresponding to the count value contains an error (quantization error) corresponding to 0.25 turn at the maximum for the rotation angle. If the pulse missing occurs, an error corresponding to 0.25 turn is added to the count value before the correction for the pulse missing. Therefore, the multiturn angle value corresponding to the count value contains an error corresponding to $\pm0.5$ turn at the maximum. If a phase difference of a voltage pulse generation position with respect to a segment boundary is added to the count value, a total error exceeds $\pm0.5$ turn. If the count value is used as it is to be combined with the absolute angle detection value, therefore, an error corresponding to $\pm1$ turn may occur at the maximum.

In this example embodiment, therefore, the correcting process is performed if a predetermined condition is satisfied when the count value and the absolute angle detection value are combined with each other. Specifically, when the count value and the absolute angle detection value are combined with each other with the external electric power supply, it is determined whether or not the absolute angle detection value belongs to either one of the two predefined angular ranges each including a rotational position at which the voltage pulse is generated when the sensor element is in the second output state. If the determination is affirmative, it is further determined whether or not the absolute angle detection value and the count value are inconsistent. Typically, it is determined whether or not the absolute angle detection value is consistent with the even-odd identity of the count value. If the inconsistency is determined, the arithmetic device determines the correcting direction based on the preceding voltage pulse polarity determined from the information identifiable of the pulse information acquired from the nonvolatile memory of the segment counter to perform the correcting process. Thus, the simple correcting process is performed, as required, whereby a precise multiturn absolute angle detection value can be provided by combining the count value of the segment counter with the angle detection value of the precision absolute angle detector.

In this manner, the precise multiturn absolute angle detection value can be generated with the use of the sole power generation sensor by combining the count value of the segment counter with the angle detection value of the precision absolute angle detector without performing a magnetization direction determining process to determine the magnetization direction of the magnetic wire and performing a correction/synchronization process based on the result of the determination.

2. The segment counter may decrement the count value, if the pulse information generated at the preceding voltage pulse generation indicates the first output state and the first polarity when the power generation sensor generates the voltage pulse of the first polarity with the sensor element in the second output state. Further, the segment counter may increment the count value, if the pulse information generated at the preceding voltage pulse generation indicates the first output state and the second polarity when the power generation sensor generates the voltage pulse of the second polarity with the sensor element in the second output state. Thus, the segment counter can correct the count value so as to compensate for the count value update failure occurring due to the influence of the voltage pulse missing caused by the reversal of the rotation direction.

3. The information identifiable of the pulse information preferably includes information, for example, about two or more of the sensor element output state, the voltage pulse polarity, and the rotation direction identified based on the sensor element output state and the voltage pulse polarity. The sensor element output state, the voltage pulse polarity and the rotation direction have a relationship such that, if two of these are determined, the remaining one of these can be identified. More specifically, the information identifiable of the pulse information may be the pulse information itself (i.e., the sensor element output state and the voltage pulse polarity). Further, the information identifiable of the pulse information may contain one of the sensor element output state and the voltage pulse polarity contained in the pulse information, and the rotation direction identified based on the pulse information. Of course, the information identifiable of the pulse information may contain all (three) of the sensor element output state, the voltage pulse polarity, and the rotation direction identified based on the sensor element output state and the voltage pulse polarity.

4. The sensor element preferably includes a magnetic sensor that is responsive to a magnetic field generated by the magnetic field generation source.

Since the magnetic field generation source is rotated together with the rotating body, the output state of the magnetic sensor is the first output state or the second output state depending on the rotational position of the rotating body, i.e., depending on the rotational position of the magnetic field generation source.

5. The multiturn angle detection device preferably performs a signal processing operation based on an angle detection origin defined at a middle position between a position at which the voltage pulse of the first polarity is generated and a position at which the voltage pulse of the second polarity is generated when the sensor element is in the second output state.

With this arrangement, phase differences of the voltage pulse generation positions with respect to a segment boundary in the opposite rotation directions can be equalized to each other. For example, a middle position between a voltage pulse generation position observed during the rotation in one of the opposite rotation directions and a voltage pulse generation position observed during the rotation in the other rotation direction may be defined as the angle detection origin (as an origin for a calculating process). In this case, the voltage pulse generation positions respectively observed during the rotation in the opposite rotation directions, i.e., the counting positions of the segment counter, are symmetrical in positive and negative directions, so that the signal processing operation can be simplified.

6. The arithmetic device preferably performs: a first step of determining the number of turns by expressing the absolute angle detection value and the count value read out from the nonvolatile memory in a same unit, subtracting one of the absolute angle detection value and the count value from the other, and converting the result of the subtraction into a unit of the number of turns and integerizing the subtraction result; and a second step of determining the multiturn absolute angle detection value by expressing the number of turns determined in the first step and the absolute angle detection value in a same unit, and summing the number of turns and the absolute angle detection value.

Where the count value is expressed in the same unit as the absolute angle detection value, for example, the subtraction in the first step can be expressed by $nU/2 - \theta s$ by using an angle detection amount U corresponding to an absolute angle detection value for one turn, the count value n of the segment counter and the absolute angle detection value $\theta s$. The computation for the determination of the number N of turns by using $nU/2 - \theta s$ in the first step is represented by the following expression (1) using an integerization operator INT (an operator that rounds off a decimal part for integerization), wherein 0.5 is a constant to be added for the rounding. Next, the computation for the determination of the multiturn absolute angle detection value $\theta m$ in the second step is represented by the following expression (2), where the count value is expressed in the same unit as the absolute angle detection value $\theta s$.

[Formula 1]

$$N = INT\left\{\left(\frac{nU}{2} - \theta s\right)/U + 0.5\right\} \qquad \ldots (1)$$

$$\theta m = N \times U + \theta s \qquad \ldots (2)$$

7. The arithmetic device preferably performs the correcting process on a value to be integerized in the first step or on the number of turns determined by the integerization in the first step based on the determined correcting direction.

The correcting process to be performed on the value to be integerized may be performed on any of the count value n, a value n/2 resulting from the conversion to the number of turns, a multiturn angle value nU/2 corresponding to the count value n, a difference $nU/2 - \theta s$ between the multiturn angle value and the absolute angle detection value $\theta s$, a value $(nU/2 - \theta s)/U$ resulting from division of the difference $nU/2 - \theta s$ by the angle detection amount U, and a value resulting from addition of a constant of 0.5 to the value $(nU/2 - \theta s)/U$ for the rounding in the expression (1). Specifically, the correcting process may be a process of addition or subtraction of a predetermined correction amount (> 0) depending on the correcting direction determined based on the voltage pulse polarity. The process to be performed on the number of turns may be such that the predetermined correction amount (> 0) is added to or subtracted from the number N of turns determined from the expression (2) depending on the correcting direction determined based on the voltage pulse polarity.

8. The power generation sensor preferably includes magnetic flux conducting pieces of a magnetically soft material provided in pair symmetrically with respect to a symmetry plane defined at the axially middle point of the magnetic wire. The magnetic flux conducting pieces provided in pair preferably respectively include axis-orthogonal portions provided in pair as extending parallel to each other from the opposite ends of the magnetic wire in an axis-orthogonal direction orthogonal to the axis direction, and axis-parallel portions provided in pair as extending from the distal ends of the axis-orthogonal portions toward each other in the axis direction with the adjacent ends thereof disposed in opposed spaced relation to each other in the axis direction. Further, the axis-orthogonal portions of the magnetic flux conducting pieces provided in pair preferably respectively have wire placement portions each formed with a hole or a groove extending therethrough in the axis direction, so that the opposite end portions of the magnetic wire are respectively fixed to the wire placement portions. The power generation sensor is preferably configured so that a region opposite from the magnetic wire with respect to the axis-parallel portions is defined as a detection region.

The magnetic field generation source preferably includes four magnetic poles fixed to the rotating body so as to be moved along a track partly extending in the axis direction of the magnetic wire (more specifically, a circular track having a tangential line parallel to the axis direction) and sequentially enter the detection region such that the magnetic poles of different polarities are to be alternately brought into opposed spaced relation to the power generation sensor as the rotating body is rotated. The magnetic fluxes of the magnetic poles are preferably applied perpendicularly to the movement direction of the magnetic poles, and intersect the magnetic wire when the magnetic poles are each brought into opposed relation to the power generation sensor. The arrangement interval of the four magnetic poles on the track is preferably greater than the overall length of the magnetic wire. The magnetic poles each preferably have a length that is shorter than the overall length of the magnetic wire as measured on the track and is not greater than 50% of the arrangement interval.

With this arrangement, when the magnetic poles each pass through the detection region of the power generation sensor, the density of the magnetic flux applied to the magnetic wire is abruptly changed from a stabilization magnetic field applied in one of the opposite directions to a stabilization magnetic field applied in the other direction. During this change, a flat zone in which the magnetic flux density is almost unchanged does not appear. This reduces variations in pulse generation position, thereby reducing a difference in pulse generation position depending on the rotation direction. Thus, the two predefined angular ranges each requiring the correcting process can be narrowed.

The magnetic field generation source including the four magnetic poles that each generate a magnetic flux perpendicularly to the movement direction of the magnetic poles in a direction (spacing direction) intersecting the magnetic wire when being brought into opposed relation to the power generation sensor can be constituted with the use of four separate magnets each magnetized in the spacing direction. These separate magnets may be, for example, general-purpose two-pole magnets each magnetizable by an air core coil, so that the costs for the magnets can be reduced. In addition, the magnetization direction is the spacing direction. This reduces the assembly costs without the need for strict adjustment of the orientations of the separate magnets (e.g., the angles of the separate magnets with respect to a radial direction) when the magnets are fixed to a support.

The magnetic poles each preferably have a length that is less than one half the overall length of the magnetic wire as measured on the track. This ensures that the magnetic flux density can be abruptly changed when the magnetic poles each pass through the detection region.

Further, the arrangement interval of the magnetic poles on the track is preferably not less than 1.5 times the overall length of the magnetic wire. Thus, when any one of the magnetic poles passes through the detection region, the one magnetic pole is less liable to be influenced by the magnetic fields of the other magnetic poles. This ensures that the magnetic flux density can be changed more abruptly.

The sensor element is preferably a magnetic sensor that is capable of determining the polarity of any one of the magnetic poles present in the axially middle position of the power generation sensor. With this arrangement, not only the position but also the rotation direction can be detected.

BRIEF DESCRIPTION OF DRAWINGS

[FIG. 1] FIG. 1 is a block diagram for illustrating the configuration of a multiturn angle detection device according to one example embodiment of the present invention by way of example.

[FIGS. 2A-2C] FIG. 2A is a perspective view for illustrating the structure of a segment counter by way of example, and FIG. 2B is a plan view of the segment counter. FIG. 2C is a front view of the segment counter as seen in an arrow direction IIC in FIG. 2B.

[FIG. 3A] FIG. 3A is a simplified plan view showing a power generation sensor in an initial state at a rotation angle of 0 degree.

[FIG. 3B] FIG. 3B shows a change in magnetic flux with respect to the rotation angle, and the operation of the power generation sensor.

[FIG. 4] FIG. 4 is a diagram for illustrating an exemplary counting operation to be performed by the segment counter.

[FIG. 5] FIG. 5 is a table for illustrating the counting operation to be performed by the segment counter in greater detail by way of example.

[FIG. 6] FIG. 6 is a diagram to be used to describe how a count value is influenced by pulse missing.

[FIG. 7] FIG. 7 shows relationships between the count value of the segment counter and the angle detection value (precise angle detection value) of a precision absolute angle detector.

[FIG. 8] FIG. 8 shows a precise multiturn absolute angle detection value (precise angle detection value) obtained by combining the count value of the segment counter with the angle detection value of the precision absolute angle detector.

[FIG. 9] FIG. 9 shows computation results each obtained by subtracting the precise angle detection value (indicated by a line 81 in FIG. 7) from a multiturn angle value (indicated by a line 82, 82-, 82+ in FIG. 7) equivalent to the count value of the segment counter and then adding 0.5 (turn) to the result of the subtraction.

[FIG. 10] FIG. 10 shows computation results respectively obtained by processing the computation results shown in FIG. 9 by an integerization operator INT (an operator that rounds off a decimal part).

[FIG. 11] FIG. 11 is a flowchart showing an exemplary process to be performed by an arithmetic device.

DESCRIPTION OF EXAMPLE EMBODIMENT

An example embodiment of the present invention will hereinafter be described in detail with reference to the attached drawings.

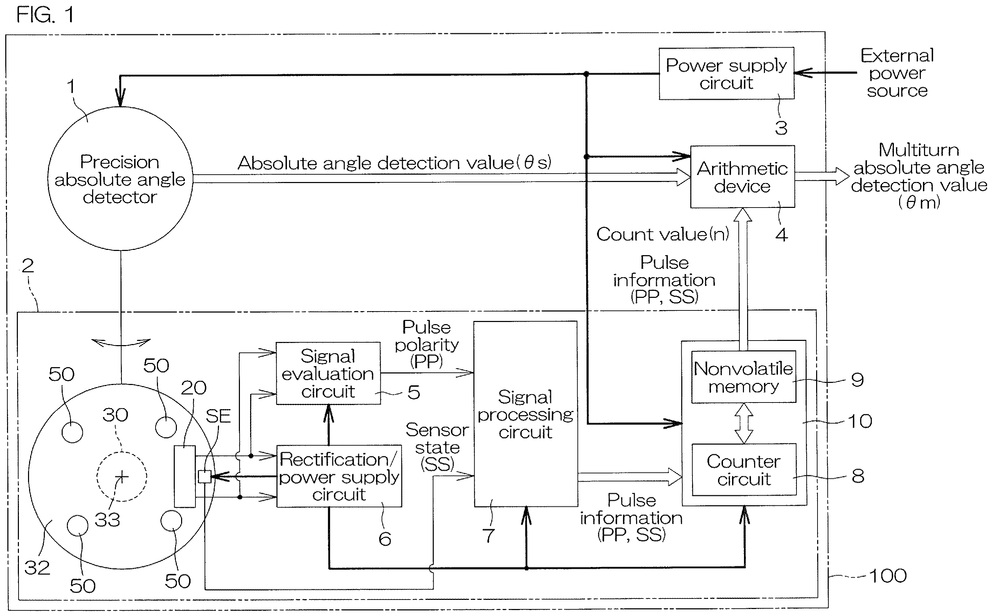

FIG. 1 is a block diagram for illustrating the structure of a multiturn angle detection device according to one example embodiment of the present invention by way of example. The multiturn angle detection device 100 is a device that detects the multiturn absolute angle of a rotation shaft 30 (an example of the rotating body) to be rotated about a rotation axis 33, and generates a detection value as a multiturn absolute angle detection value. The multiturn absolute angle is an absolute angle in an angular range over one turn (i.e., in a multiturn angular range). The multiturn angle detection device 100 includes a precision absolute angle detector 1, a segment counter 2 and an arithmetic device 4.

The precision absolute angle detector 1 is an angle sensor that generates a precise absolute angle detection value within the single-turn cycle of the rotation shaft 30 (i.e., 0 degree to 360 degrees) at a resolution higher than that of the segment counter 2 to be described below. The precision absolute angle detector 1 is constituted, for example, by an optical absolute encoder. The precision absolute angle detector 1 is configured, for example, to generate an absolute angle detection value within an angular range of a single-turn cycle (0 degree to 360 degrees) at a resolution of 16 bits (65536 steps).

The precision absolute angle detector 1 is typically operative by receiving electric power supply from an external power source. Specifically, the multiturn angle detection device 100 includes a power supply circuit 3 connectable to the external power source. The power supply circuit 3 supplies electric power to the precision absolute angle detector 1 when being connected to the external power source, and the precision absolute angle detector 1 is operative by receiving the electric power. The precision absolute angle detector 1 inputs the 16-bit absolute angle detection value to the arithmetic device 4, for example, through serial communications.

The segment counter 2 counts segments defined by dividing (equally dividing) the single-turn cycle of the rotation shaft 30 according to the rotation of the rotation shaft 30, and generates a count value indicating a segment-based angle value in an angular range of the multiple turns of the rotation shaft 30 (over one turn). In this example embodiment, the segment counter 2 counts the segments defined by dividing the single-turn cycle of the rotation shaft 30 into two (typically, by equally dividing the single-turn cycle of the rotation shaft 30 into two). That is, a basic count value per each turn of the rotation shaft 30 is two.

The segment counter 2 includes a single (sole) power generation sensor 20, a magnetic field generation source 50 to be rotated together with the rotation shaft 30 about the rotation axis 33, a sensor element SE different from the power generation sensor 20 (other than the power generation sensor), a counter circuit 8, and a nonvolatile memory 9 that stores the count value. The nonvolatile memory 9 may be constituted by a FeRAM (ferroelectric random access memory). In this example embodiment, the counter circuit 8 and the nonvolatile memory 9 are incorporated in a single counter memory IC (integrated circuit) 10. The segment counter 2 further includes a signal evaluation circuit 5, a rectification/power supply circuit 6 and a signal processing circuit 7.

The power generation sensor 20 generates a voltage pulse according to a magnetic field change occurring due to the rotation of the magnetic field generation source 50. A sensor state SS, which is the output state of the sensor element SE, is either a first output state or a second output state depending on the rotational position of the rotation shaft 30. The sensor state SS is supplied to the signal processing circuit 7. In this example embodiment, the sensor element SE is a magnetic sensor that detects the magnetic field of the magnetic field generation source 50 according to the rotation of the magnetic field generation source 50, and assumes the first output state or the second output state in response to the magnetic field generated by the magnetic field generation source 50. An example of the magnetic sensor is a Hall IC. The signal evaluation circuit 5 determines the polarity of the voltage pulse generated by the power generation sensor 20, and supplies a signal indicating the result of the determination of the polarity (pulse polarity PP) to the signal processing circuit 7. The signal processing circuit 7 converts the signal indicating the polarity determination result (pulse polarity PP) received from the signal evaluation circuit 5 and a signal indicating the output state of the sensor element SE (sensor state SS) into digital data (serial signals), which is supplied as pulse information (PP, SS) to the counter memory IC 10. The pulse information includes the pulse polarity PP and the sensor state SS.

The rectification/power supply circuit 6 rectifies the voltage pulse generated by the power generation sensor 20 to a proper voltage level, and supplies the resulting voltage pulse to the sensor element SE, the signal evaluation circuit 5, the signal processing circuit 7 and the counter memory IC 10 (the counter circuit 8 and the nonvolatile memory 9). Therefore, the sensor element SE, the signal evaluation circuit 5, the signal processing circuit 7 and the counter memory IC 10 (the counter circuit 8 and the nonvolatile memory 9) are operative without receiving the electric power supply from the external power source. That is, the segment counter 2 is operative with electric power generated by self-power generation even without the external electric power supply. The counter memory IC 10 is operative by receiving the electric power supply from the power supply circuit 3 when the power supply circuit 3 is connected to the external power source.

The counter circuit 8 incorporated in the counter memory IC 10 performs a counting operation according to a predetermined counter logic based on the pulse information (the pulse polarity PP and the sensor state SS) supplied from the signal processing circuit 7 and preceding pulse information stored in the nonvolatile memory 9. The counting operation is performed whether or not the electric power is supplied from the external power source through the power supply circuit 3. The count value provided by the counting operation is stored in the nonvolatile memory 9. The count value is kept stored even without the electric power supply (nonvolatile storage). The counter memory IC 10 can supply the count value and the pulse information (PP, SS) stored in the nonvolatile memory 9 to the arithmetic device 4 through serial communications when the electric power is supplied from the external power source.

The arithmetic device 4 is operative by receiving the electric power supply from the power supply circuit 3 when the power supply circuit 3 is connected to the external power source. When the external power source is turned on, the arithmetic device 4 requests the precision absolute angle detector 1 to supply the precise absolute angle detection value, and requests the nonvolatile memory 9 to supply the count value and the pulse information (PP, SS). The precision absolute angle detector 1 supplies the precise absolute angle detection value to the arithmetic device 4 through serial communications. The nonvolatile memory 9 supplies the count value and the pulse information (PP, SS) to the arithmetic device 4 through serial communications. The arithmetic device 4 combines the precise absolute angle detection value with the count value to generate the multiturn absolute angle detection value, and outputs the multiturn absolute angle detection value. The multiturn absolute angle detection value outputted from the arithmetic device 4 is supplied, for example, to an upper level controller (not shown), and is used for the rotation control of an electric motor and the like.

The arithmetic device 4 uses the count value supplied from the nonvolatile memory 9, and combines the count value with the precise absolute angle detection value. The arithmetic device 4 performs a correcting process to be described later, as required, for the combining.

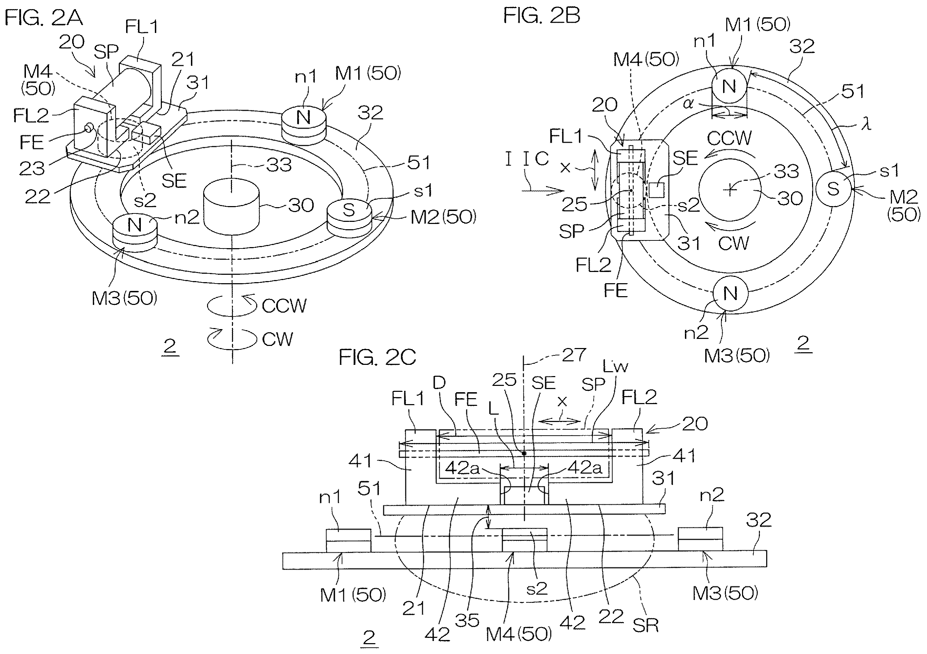

FIG. 2A is a perspective view for illustrating the structure of the segment counter 2 by way of example, and FIG. 2B is a plan view of the segment counter 2. Further, FIG. 2C is a front view of the segment counter 2 as seen in an arrow direction IIC. The segment counter 2 includes the power generation sensor 20, the magnetic field generation source 50 and the sensor element SE (e.g., magnetic sensor (MS)).

The power generation sensor 20 is disposed on a first support 31, and supported by the first support 31. In this example embodiment, the sensor element SE is also mounted on the first support 31.

The magnetic field generation source 50 is fixed to a second support 32. The second support 32 is movable relative to the first support 31. Specifically, the second support 32 is combined with (fixed to) the rotation shaft 30, and is rotatable together with the rotation shaft 30 about the rotation axis 33. Therefore, the second support 32 may be a part of the rotating body. In contrast, the first support 31 is stationary to be held in a nonrotatable state. Thus, the magnetic field generation source 50 is rotatable together with the second support 32 about the rotation axis 33 to be thereby moved relative to the first support 31.

The rotation shaft 30 is typically rotated by a driving force applied from the drive shaft of the electric motor (not shown). Where the electric motor is driven in opposite directions, the rotation shaft 30 is correspondingly rotated in a counterclockwise direction CCW and in a clockwise direction CW. The first support 31 may be a printed wiring board disposed in a plane orthogonal to the rotation axis 33.

The magnetic field generation source 50 includes four magnets M1, M2, M3, M4 (separate magnets) disposed apart from the rotation axis 33. The magnets M1, M2, M3, M4 are fixed to the second support 32 so as to sequentially enter the detection region SR of the power generation sensor 20 by the rotational movement of the second support 32 about the rotation axis 33. The magnets M1, M2, M3, M4 are each magnetized parallel to the rotation axis 33, and are arranged equiangularly about the rotation axis 33. The magnets M1, M2, M3, M4 are plates (more specifically, disks) each magnetized in a thickness direction thereof by way of example but not by way of limitation. Separate magnets each having, for example, a parallelepiped shape or a rectangular plate shape, or an arcuate shape (specifically, a fan shape with its radially inner portion removed) in plan view may be used as the magnets M1, M2, M3, M4.

The magnets M1, M2, M3, M4 are magnetized so that N-poles n1, n2, ... and S-poles s1, s2, ... are alternately arranged circumferentially in plan view as seen parallel to the rotation axis 33 (see FIG. 2B). Thus, the magnetic poles having different polarities, i.e., the N-poles and the S-poles, alternately enter the detection region SR of the power generation sensor 20 (see FIG. 2C) as the second support 32 is rotated about the rotation axis 33 in one direction, whereby an alternating magnetic field is generated in the vicinity of the power generation sensor 20. The magnetic poles n1, s1, n2, s2 are moved along a circular track 51 around the rotation axis 33. The layout of the power generation sensor 20 and the magnetic field generation source 50 is defined so that the track 51 passes through the detection region SR. The magnetic poles n1, s1, n2, s2 are arranged equidistantly on the track 51.

The power generation sensor 20 is mounted on one of the opposite major surfaces of the first support 31 (printed wiring board). The power generation sensor 20 includes a magnetic wire FE, and a first magnetic flux conducting piece FL1 and a second magnetic flux conducting piece FL2 provided in pair and composed of magnetically soft components respectively magnetically coupled to the opposite ends of the magnetic wire FE. A coil SP (induction coil) is wound around the magnetic wire FE between the first magnetic flux conducting piece FL1 and the second magnetic flux conducting piece FL2. The first magnetic flux conducting piece FL1 and the second magnetic flux conducting piece FL2 are respectively composed of magnetically soft components having substantially the same shape and substantially the same size. More specifically, the first magnetic flux conducting piece FL1 and the second magnetic flux conducting piece FL2 are configured symmetrically with respect to a symmetry plane 27 (a virtual plane to be used to describe the geometrical layout) extending orthogonally to an axis direction x through the axially middle point 25 of the magnetic wire FE (hereinafter referred to simply as "axially middle point 25").

The magnetic wire FE is configured to exhibit the large Barkhausen effect. Specifically, the magnetic wire FE has a core portion, and a shell portion covering the core portion. One of the core portion and the shell portion is a soft layer (magnetically soft layer) in which its magnetization direction is reversed even by application of a weak magnetic field, and the other of the core portion and the shell portion is a hard layer (magnetically hard layer) in which its magnetization direction is reversed only by application of a strong magnetic field.

The magnetic flux conducting pieces FL1, FL2 respectively have magnetic flux conducting ends 21, 22 opposed to the detection region SR. The axis direction x of the magnetic wire FE is set parallel to a tangential line of the track 51 extending through a point (contact point) present on the track 51 between the pair of magnetic flux conducting ends 21, 22, and the middle point 25 of the magnetic wire FE with respect to the axis direction x (hereinafter referred to simply as "axially middle point 25") is set on a perpendicular line extending through the contact point perpendicularly to the tangential line.

In this example embodiment, the first magnetic flux conducting piece FL1 and the second magnetic flux conducting piece FL2 respectively have axis-orthogonal portions 41 extending parallel to each other from the opposite ends of the magnetic wire FE in an axis-orthogonal direction orthogonal to the axis direction x, and axis-parallel portions 42 respectively extending toward each other from the distal end portions of the axis-orthogonal portions 41 in the axis direction x. The opposite ends of the magnetic wire FE are respectively fixed to the proximal portions of the axis-orthogonal portions 41 of the first magnetic flux conducting piece FL1 and the second magnetic flux conducting piece FL2. More specifically, the proximal portions of the axis-orthogonal portions 41 each include a wire placement portion 23 formed with a hole or a groove extending therethrough in the axis direction x. The opposite end portions of the magnetic wire FE respectively extend through the wire placement portions 23 of the axis-orthogonal portions 41 of the first magnetic flux conducting piece FL1 and the second magnetic flux conducting piece FL2, and are respectively fixed to the axis-orthogonal portions 41. The magnetic wire FE is connected and fixed to the first magnetic flux conducting piece FL1 and the second magnetic flux conducting piece FL2, for example, by resin portions (not shown) each provided in the hole or the groove of the wire placement portion 23. Thus, the opposite end portions of the magnetic wire FE are respectively magnetically coupled to the first magnetic flux conducting piece FL1 and the second magnetic flux conducting piece FL2.

The power generation sensor 20 is configured so that a region opposite from the magnetic wire FE with respect to the axis-parallel portions 42 is defined as the detection region SR for the detection of a magnetic field.

The magnetic flux conducting pieces FL1, FL2 each composed of the magnetically soft component each include the axis-orthogonal portion 41 (having a generally parallelepiped shape) and the axis-parallel portion 42 (having a generally parallelepiped shape) connected to the distal end portion of the axis-orthogonal portion 41 adjacent to the detection region SR, and each have an L-shape bent at a right angle at a connection portion between the axis-orthogonal portion 41 and the axis-parallel portion 42. The axis-parallel portions 42 extend in the axis direction x so as to shield the magnetic wire FE, i.e., so as to shield the magnetic wire FE from the detection region SR. The first magnetic flux conducting piece FL1 and the second magnetic flux conducting piece FL2, which are symmetrically configured, extend toward the axially middle portion of the magnetic wire FE, and the adjacent ends 42a of the first magnetic flux conducting piece FL1 and the second magnetic flux conducting piece FL2 are opposed to each other with a gap defined therebetween around the axially middle point 25 of the magnetic wire FE. A middle position of the gap with respect to the axis direction x corresponds to the position of the axially middle point 25 with respect to the axis direction x and, therefore, distances from the adjacent ends 42a of the axis-parallel portions 42 provided in pair to the symmetry plane 27 are equal to each other as measured in the axis direction x. The gap has a length L that is 5% to 50%, preferably 20% to 40%, of a distance D between the pair of the axis-orthogonal portions 41 as measured in the axis direction x between connection positions at which the magnetic wire FE is connected to the axis-orthogonal portions 41. More specifically, the distance D is a distance between the inner surfaces of the pair of magnetic flux conducting pieces FL1, FL2 (the inner surfaces of the axis-orthogonal portions 41) opposed to each other in the axis direction x as measured in the axis direction x between the connection positions at which the magnetic wire FE is connected to the axis-orthogonal portions 41. The adjacent ends 42a each have a surface extending orthogonally to the axis direction x, and the two surfaces of the two adjacent ends 42a are parallel to each other and opposed to each other in the axis direction x.

The magnetically soft components of the magnetic flux conducting pieces FL1, FL2 are each preferably composed of a material having a coercive force smaller than that of the magnetic wire FE and a relative permeability of not less than 500. Such a material has a lower magnetic resistance, a lower hysteresis and a lower self-inductance.

Therefore, even if a high-frequency alternating magnetic field is applied to the magnetic flux conducting pieces FL1, FL2 when the magnetic field generation source 50 is moved at a higher speed, the output characteristic of the power generation sensor 20 is less liable to be influenced by the high-frequency alternating magnetic field. Specifically, the magnetically soft components are preferably composed of a Ni-based ferrite or a Mn-based ferrite.

The magnetic flux conducting ends 21, 22 of the axis-parallel portions 42 of the first magnetic flux conducting piece FL1 and the second magnetic flux conducting piece FL2 respectively serve as detection region opposition surfaces opposed to the detection region SR. The magnetic flux conducting ends 21, 22 (detection region opposition surfaces) are planar surfaces parallel to the axis direction x. When any one of the magnetic poles is located in the detection region SR, the magnetic flux conducting ends 21, 22 (detection region opposition surfaces) guide a magnetic flux from the magnetic pole into the first magnetic flux conducting piece FL1 and the second magnetic flux conducting piece FL2.

The axis-parallel portions 42 of the first magnetic flux conducting piece FL1 and the second magnetic flux conducting piece FL2 are joined with a wiring pattern (not shown) formed on the one major surface of the first support 31 (printed wiring board), whereby the power generation sensor 20 is surface-mounted on the first support 31 (printed wiring board). The power generation sensor 20 is disposed so that the axis direction x of the magnetic wire FE extends along a tangential line of a circle defined about the rotation axis 33 through a point (contact point) present on the circle, and the axially middle point 25 of the magnetic wire FE coincides with the contact point. The detection region SR of the power generation sensor 20 is located on a side of the axis-parallel portions 42 opposite from the magnetic wire FE and, in this example, is a region adjacent to the other major surface of the first support 31 (printed wiring board).

In the power generation sensor 20 having the aforementioned structure, the magnetic field in the detection region SR is guided to the opposite ends of the magnetic wire FE by the magnetic flux conducting pieces FL1, FL2 composed of the magnetically soft components. In addition, the axis-parallel portions 42 extending parallel to the axis direction x of the magnetic wire FE are present between the detection region SR and the magnetic wire FE, so that a magnetic flux directed from the detection region SR toward the axially middle portion (axially middle position) of the magnetic wire FE is shielded by the axis-parallel portions 42. Particularly, where the distance L between the adjacent ends 42a of the axis-parallel portions 42 of the pair of the magnetic flux conducting pieces FL1, FL2 as measured in the axis direction x is 5% to 50% of the distance D between the axis-orthogonal portions 41 as measured between the connection positions at which the magnetic wire FE is connected to the axis-orthogonal portions 41, an excellent magnetic shielding effect can be ensured. Since the magnetic field can be applied in the axis direction x to a wider axial range of the magnetic wire FE, the large Barkhausen effect can be sufficiently exhibited to provide higher output signals.

In addition, the power generation sensor 20 includes the magnetic flux conducting pieces FL1, FL2, and the magnetic wire FE is connected to the magnetic flux conducting pieces FL1, FL2. Therefore, it is merely necessary to provide the magnetic field generation source 50 (magnets M1, M2, M3, M4) as a detection medium in the detection region SR. Thus, magnets having different shapes and/or different polarities can be easily provided in combination as the magnetic field generation source 50.

The four magnets M1, M2, M3, M4 of the magnetic field generation source 50 are disposed with their magnetic poles n1, s1, n2, s2 to be opposed to the first support 31 (printed wiring board). In this example, the second support 32 is configured in an annular shape surrounding the rotation axis 33. More specifically, the second support 32 is constituted by an annular plate, and is disposed in a plane orthogonal to the rotation axis 33 and parallel to the first support 31 (printed wiring board). The magnets M1, M2, M3, M4 are fixed to a surface of the second support 32 opposed to the other major surface of the first support 31 (printed wiring board). The magnets M1, M2, M3, M4 are arranged circumferentially equidistantly about the rotation axis 33, i.e., at an angular interval of 90 degrees about the rotation axis 33. The magnetization directions of the magnets M1, M2, M3, M4 are parallel to the rotation axis 33. The magnets M1, M2, M3, M4 are fixed to the second support 32 so that the magnetic poles n1, s1, n2, s2 of the different polarities are alternately brought into opposed relation to the first support 31 (printed wiring board) as the rotation shaft 30 is rotated in one direction. Distances from the rotation axis 33 to the magnets M1, M2, M3, M4 (more specifically, to the centers of the magnetic poles n1, s1, n2, s2 to be opposed to the first support 31) are each equal to a distance from the rotation axis 33 to the axially middle point 25 of the magnetic wire FE. That is, the magnetic wire FE and the magnets M1, M2, M3, M4 are located on the same radius circle defined about the rotation axis 33 in plan view as seen along the rotation axis 33. Thereby, the magnetic wire FE and the magnets M1, M2, M3, M4 are arranged in a positional relationship such that the magnets M1, M2, M3, M4 can be each opposed to the magnetic wire FE in a direction parallel to the rotation axis 33. The second support 32 is preferably a yoke composed of a magnetically soft material.

The magnets M1, M2, M3, M4 are each magnetized in the direction parallel to the rotation axis 33. Therefore, the directions of the magnetic fluxes of the magnetic poles n1, s1, n2, s2 are perpendicular to the movement direction of the magnetic poles n1, s1, n2, s2, and each intersect the magnetic wire FE when the magnetic poles n1, s1, n2, s2 are each opposed to the power generation sensor 20. That is, the directions of the magnetic fluxes of the magnetic poles n1, s1, n2, s2 are directions (spacing directions) such that the magnetic poles n1, s1, n2, s2 are each spaced a distance 35 from the power generation sensor 20 when being opposed to the power generation sensor 20.

The arrangement interval λ of the four magnetic poles n1, s1, n2, s2 on the track 51, i.e., a distance between each circumferentially adjacent pair of the magnetic poles n1, s1, n2, s2, is greater than the overall length Lw of the magnetic wire FE (see FIG. 2C). In this example, more specifically, the arrangement interval $\lambda$ is not less than 1.5 times the overall length Lw of the magnetic wire FE. Further, the lengths $\alpha$ of the magnetic poles n1, s1, n2, s2 on the track 51 (as measured along the track 51) are shorter than the overall length Lw of the magnetic wire FE, and are not greater than 50% of the magnetic pole arrangement interval $\lambda$. In this example, the lengths $\alpha$ of the magnetic poles n1, s1, n2, s2 on the track 51 are not greater than one half the overall length Lw of the magnetic wire FE.

The sensor element SE (e.g., magnetic sensor) is also mounted on the major surface of the first support 31 (printed wiring board) mounted with the power generation sensor 20. In this example, the sensor element SE is located at a position such as to be generally opposed to the middle point of the magnetic wire FE with respect to the axis direction x. Thus, the sensor element SE detects a magnetic field from any one of the magnetic poles n1, s1, n2, s2 to output an identification signal when the one magnetic pole n1, s1, n2, s2 is opposed to the power generation sensor 20 on the track 51 between the first magnetic flux conducting piece FL1 and the second magnetic flux conducting piece FL2. Thereby, the sensor element SE assumes the first output state to output an identification signal indicating the detection of an N-pole, or assumes the second output state to output an identification signal indicating the detection of an S-pole, when the one magnetic pole n1, s1, n2, s2 is located in opposed relation to the middle portion of the power generation sensor 20. The sensor element SE may be disposed in some other layout. Specifically, the sensor element SE is merely required to be located at a position at which a magnetic field from any one of the magnetic poles n1, s1, n2, s2 can be detected when another of the magnetic poles n1, s1, n2, s2 is opposed to the middle portion of the power generation sensor 20. More specifically, with reference to the layout shown in FIG. 2B, the sensor element SE may be disposed at any one of plural positions arranged at an angular interval of 360 degrees/4 (= 90 degrees) about the rotation axis 33.

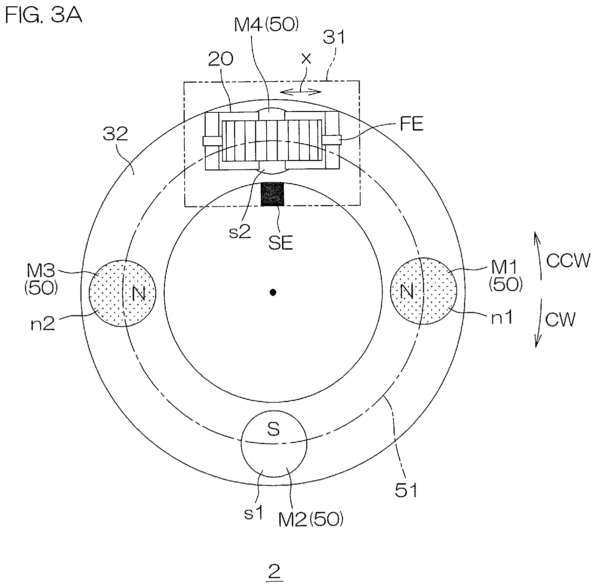

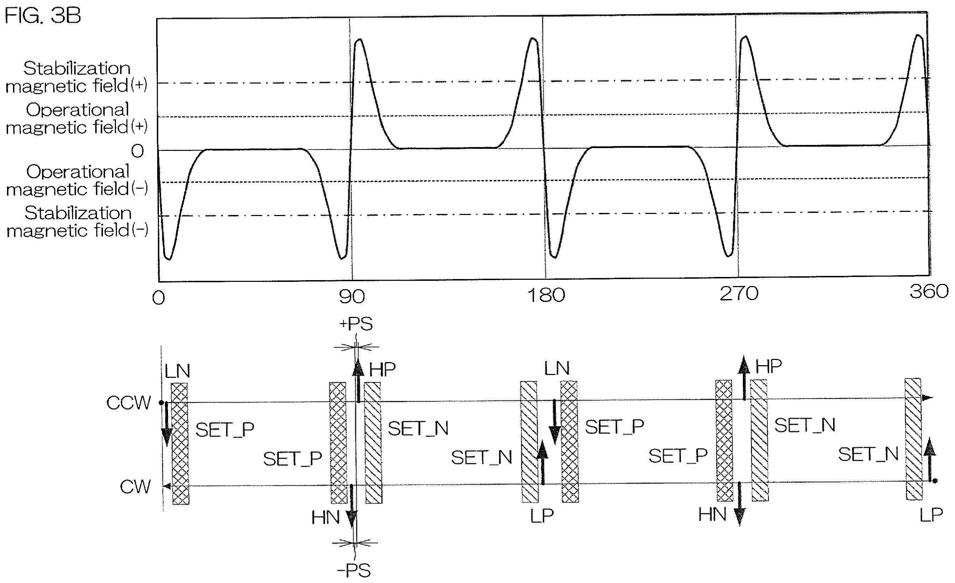

FIG. 3A is a simplified plan view of the segment counter 2, and FIG. 3B shows a change in magnetic flux with respect to the rotation angle, and the operation of the power generation sensor 20. In FIG. 3A, the S-pole s2 is opposed to the middle portion of the power generation sensor 20, and the N-pole n1 is present at a position located apart by 90 degrees from the power generation sensor 20 in the clockwise direction CW. A rotation angle at which this state is assumed is defined as the origin (0 degree) of the rotation angle, and the value of the rotation angle increases as the second support 32 is rotated in the counterclockwise direction CCW. The magnetic flux density change observed when the second support 32 is rotated is shown in FIG. 3B. Here, the magnetic flux density is defined as the density of a magnetic flux component passing through the magnetic wire FE.

The magnetic field generation source 50 (magnets M1, M2, M3, M4) generates a two-cycle alternating magnetic field per each turn of the rotation shaft 30 about the rotation axis 33.

If the magnetic flux density is reduced below a negative stabilization magnetic field when the four magnets M1, M2, M3, M4 are rotated together with the second support 32 in the counterclockwise direction CCW, a positive pulse preparatory state SET_P (positive set state) is achieved and, if the magnetic flux density is thereafter increased above a positive operational magnetic field, a positive pulse P is generated. Further, if the magnetic flux density is increased above a positive stabilization magnetic field when the four magnets M1, M2, M3, M4 are rotated together with the second support 32 in the counterclockwise direction CCW, a negative pulse preparatory state SET_N (negative set state) is achieved and, if the magnetic flux density is thereafter reduced below a negative operational magnetic field, a negative pulse N is generated. Therefore, as shown in FIG. 3B, the negative pulse N is generated at around 0 degree and 180 degrees, and the positive pulse P is generated at around 90 degrees and 270 degrees.

Similarly, if the magnetic flux density is reduced below the negative stabilization magnetic field when the four magnets M1, M2, M3, M4 are rotated together with the second support 32 in the clockwise direction CW, the positive pulse preparatory state SET_P (positive set state) is achieved and, if the magnetic flux density is thereafter increased above the positive operational magnetic field, a positive pulse P is generated. Further, if the magnetic flux density is increased above the positive stabilization magnetic field when the four magnets M1, M2, M3, M4 are rotated together with the second support 32 in the clockwise direction CW, the negative pulse preparatory state SET_N (negative set state) is achieved and, if the magnetic flux density is thereafter reduced below the negative operational magnetic field, a negative pulse N is generated. Therefore, as shown in FIG. 3B, the positive pulse P is generated at around 0 degree (360 degrees) and 180 degrees, and the negative pulse N is generated at around 90 degrees and 270 degrees.

On the other hand, the N-pole n1 or n2 is opposed to the power generation sensor 20 at around 90 degrees or 270 degrees, so that the sensor element SE assumes the first output state H. Further, the S-pole s1 or s2 is opposed to the power generation sensor 20 at around 0 degree or 180 degrees, so that the sensor element SE assumes the second output state L. Therefore, as shown in FIG. 3B, a state observed when a positive pulse P is generated at around 90 degrees or 270 degrees is herein indicated by pulse information HP, and a state observed when a negative pulse N is generated at around 90 degrees or 270 degrees is herein indicated by pulse information HN. Further, a state observed when a positive pulse P is generated at around 0 degree or 180 degrees is herein indicated by pulse information LP, and a state observed when a negative pulse N is generated at around 0 degree or 180 degrees is herein indicated by pulse information LN.

As shown in FIG. 3B, the pulse information is HP or LN if the rotation direction is the counterclockwise direction CCW, and the pulse information is HN or LP if the rotation direction is the clockwise direction CW. That is, the counter memory IC 10 can identify that the rotation direction is the counterclockwise direction CCW if the pulse information is HP or LN. The counter memory IC 10 can identify that the rotation direction is the clockwise direction CW if the pulse information is HN or LP.

At around 0 degree (360 degrees), 90 degrees, 180 degrees and 270 degrees, a change in magnetic flux density with respect to the rotation angle is very steep. This reduces variations in pulse generation position (an angle at which the pulse is generated), so that an offset of the pulse generation position depending on the rotation direction, i.e., the phase difference $\pm$PS, is very small. In addition, an angular difference observed from the application of the operational magnetization field to the application of the stabilization magnetic field is very small, so that a so-called pulse missing occurs only in a narrow rotation angle range (reversal range) when the movement direction (rotation direction) is reversed.

Since the longer axis direction of the power generation sensor 20 coincides with the direction of a tangential line of the circle, the outer size of the segment counter 2 can be reduced. In another aspect, the diameter of a hollow portion of the second support 32 can be increased. In addition, separate general-purpose magnets, which can be produced by magnetization thereof in the thickness direction by an air core coil, are usable as the magnets M1, M2, M3, M4, so that the costs of the magnets can be reduced. Of course, separate magnets of the same design can be generally used for rotation detection devices of different sizes. This obviates the need for special magnets of dedicated design. It is merely necessary to fix the magnets M1, M2, M3, M4 (which are separate magnets magnetized in the thickness direction) to the second support 32 with the N-poles and the S-poles thereof alternately directed in one direction. This simplifies the assembly operation, and correspondingly reduces the assembly costs.

As described above, the arrangement interval $\lambda$ of the four magnetic poles n1, s1, n2, s2 on the track 51 is greater than (preferably not less than 1.5 times) the overall length Lw of the magnetic wire FE. Thus, as shown in FIG. 3B, a flat zone in which the magnetic flux density is zero appears in an intermediate range between each adjacent two rotation angles of 0 degree (360 degrees), 90 degrees, 180 degrees and 270 degrees at which pulses are generated. Thus, the influences of the magnetic fields from adjacent magnetic poles n1, s1, n2, s2 on the track 51 can be separated from each other, whereby the change in magnetic flux density can be made steep at around 0 degree (360 degrees), 90 degrees, 180 degrees and 270 degrees. This tendency can be further enhanced if the magnetic poles n1, s1, n2, s2 on the track 51 each have a length $\alpha$ that is not greater than 50% of the arrangement interval $\lambda$ of the magnetic poles.

As described above, the magnetic poles n1, s1, n2, s2 on the track 51 each have a length $\alpha$ that is shorter than the overall length Lw of the magnetic wire FE. Thereby, the steep change in magnetic flux density can be ensured with no flat zone appearing at around 0 degree (360 degrees), 90 degrees, 180 degrees and 270 degree. The magnetic poles n1, s1, n2, s2 each preferably have a length $\alpha$ that is not greater than one half the overall length Lw of the magnetic wire FE, because the change in magnetic flux density can be made steeper.

With this arrangement, one pulse is generated whenever the magnetic poles n1, s1, n2, s2 of the magnets M1, M2, M3, M4 are each moved through the detection region SR along the track 51 by the rotation about the rotation axis 33 in the counterclockwise direction CCW, and four voltage pulses are generated per each turn. Similarly, one pulse is generated whenever the magnetic poles n1, s1, n2, s2 of the magnets M1, M2, M3, M4 are each moved through the detection region SR along the track 51 by the rotation about the rotation axis 33 in the clockwise direction CW, and four voltage pulses are generated per each turn. Then, the rotational position and the rotation direction can be identified based on the polarities of these pulses and the output state (the first output state H or the second output state L) of the sensor element SE observed when any one of the magnets M1, M2, M3, M4 is present between the first magnetic flux conducting piece FL1 and the second magnetic flux conducting piece FL2 on the track 51.

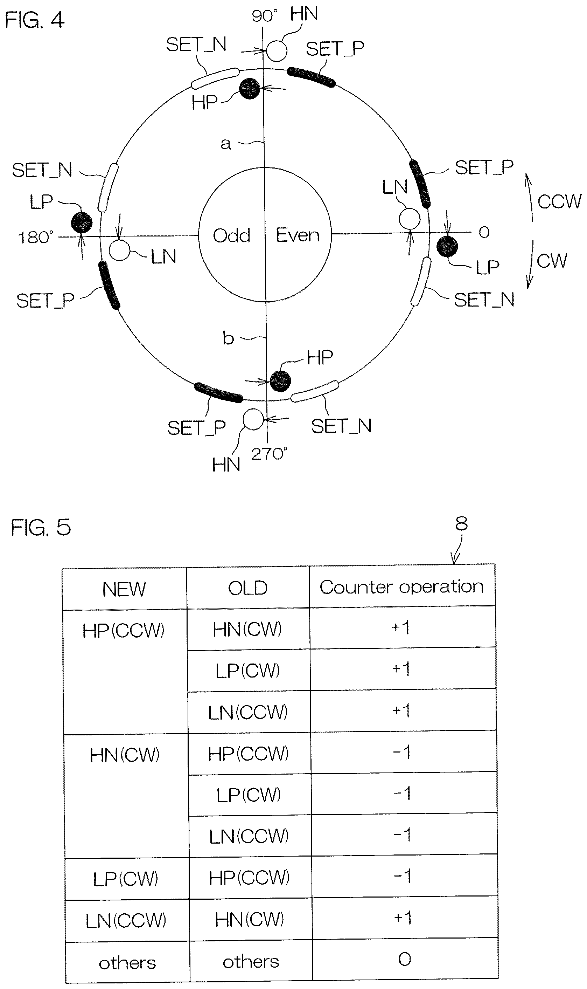

FIG. 4 is a diagram for illustrating an operation to be performed by the segment counter 2 by way of example. In this example embodiment, the segment counter 2 counts segments defined by dividing (typically, equally dividing) the angular range about the rotation axis 33 into two, and generates a count value indicating the result of the counting. Two segments are defined by two boundaries a and b set at an angular interval of 180 degrees about the rotation axis 33. The count value of the segment counter 2 is changed in response to a voltage pulse generated by the power generation sensor 20 at the boundaries a, b. That is, the segment counter 2 performs the counting operation twice per each turn. Specifically, the boundary a corresponds to a position (90 degrees) at which the N-pole n1 is opposed to the middle portion of the power generation sensor 20, and the boundary b corresponds to a position (270 degrees) at which the N-pole n2 is opposed to the middle portion of the power generation sensor 20. The segment counter 2 performs a counting-up operation (to increment the count value) when the N-pole n1, n2 is moved in the counterclockwise direction CCW across the position at which the N-pole n1, n2 is opposed to the middle portion of the power generation sensor 20, and performs a counting-down operation (to decrement the count value) when the N-pole n1, n2 is moved in the clockwise direction CW across the position at which the N-pole n1, n2 is opposed to the middle portion of the power generation sensor 20.

The meanings of characters shown in FIG. 4 are the same as described with reference to FIG. 3B, as will be described below. "H" is a state value indicating that the sensor element SE detects either one of the N-poles n1, n2 in the first output state. "L" is a state value indicating that the sensor element SE detects either one of the S-poles s1, s2 in the second output state. These state values correspond to magnetic detection data generated based on the output of the sensor element SE by the signal processing circuit 7. "P" is a pulse polarity value indicating that the power generation sensor 20 generates a positive pulse. "N" is a pulse polarity value indicating that the power generation sensor 20 generates a negative pulse. These pulse polarity values correspond to polarity determination data generated based on the output of the signal evaluation circuit 5 by the signal processing circuit 7.

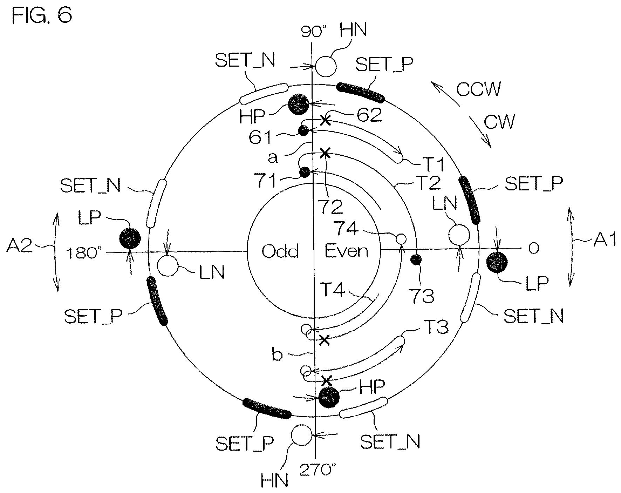

The pulse information to be supplied from the signal processing circuit 7 to the counter circuit 8 is represented by a combination of these characters, and is updated and stored as information identifiable of the pulse information in the nonvolatile memory 9 every time the power generation sensor 20 generates a pulse. "HP" is pulse information indicating that a positive pulse is generated with either one of the N-poles n1, n2 in opposed relation to the middle portion of the power generation sensor 20. "LN" is pulse information indicating that a negative pulse is generated with either one of the S-poles s1, s2 in opposed relation to the middle portion of the power generation sensor 20. "HN" is pulse information indicating that a negative pulse is generated with either one of the N-poles in opposed relation to the middle portion of the power generation sensor 20. "LP" is pulse information indicating that a positive pulse is generated with either one of the S-poles s1, s2 in opposed relation to the middle portion of the power generation sensor 20. In FIG. 4, arrows provided at the positions (pulse generation positions) at which the pulse information is generated each indicate a rotation direction (the counterclockwise direction CCW or the clockwise direction CW) observed at the generation of the voltage pulse. The same definition applies to FIG. 6 to be described later.

As in FIG. 3B, "SET_P" indicates an angular range for a preparatory state for positive pulse generation (positive set state). "SET_N" indicates an angular range for a preparatory state for negative pulse generation (negative set state).

Basic operations to be performed by the segment counter 2 are as follows:
When the rotation shaft 30 is rotated in the counterclockwise direction CCW, positive pulses are generated around the boundaries a, b respectively corresponding to rotation angles of 90 degrees and 270 degrees. At this time, the pulse information HP is generated. In response to the pulse information HP, the segment counter 2 counts up by 1 (increments the count value). That is, the segment counter 2 counts up when the rotation angle is increased above 90 degrees (at the boundary a) and then above 270 degrees (at the boundary b). As shown in FIG. 3B, the change in magnetic flux density with respect to the rotation angle has finite inclinations. Therefore, a position (pulse generation position) at which the pulse information HP is generated during the rotation in the counterclockwise direction CCW has a positive phase difference +PS (e.g., +2 degrees) with respect to 90 degrees (at the boundary a) and 270 degrees (at the boundary b).

When the rotation shaft 30 is rotated in the clockwise direction CW, negative pulses are generated around the boundaries a, b respectively corresponding to rotation angles of 90 degrees and 270 degrees. At this time, the pulse information HN is generated. In response to the pulse information HN, the segment counter 2 counts down (decrements the count value). That is, the segment counter 2 counts down when the rotation angle is reduced below 90 degrees (at the boundary a) and then below 270 degrees (at the boundary b). As shown in FIG. 3B, the change in magnetic flux density with respect to the rotation angle has finite inclinations. Therefore, a position (pulse generation position) at which the pulse information HN is generated during the rotation in the clockwise direction CW has a negative phase difference -PS (e.g., -2 degrees) with respect to 90 degrees (at the boundary a) and 270 degrees (at the boundary b).

FIG. 5 is a table for illustrating the counting operation to be performed by the segment counter 2 in greater detail by way of example. The counter circuit 8 incorporated in the counter memory IC 10 performs the counting operation according to a logic based on the table. When the power generation sensor 20 generates a pulse, the pulse information inputted from the signal processing circuit 7 to the counter circuit 8 is updated. The counting operation (Counter Operation) is determined by a combination of the updated pulse information (NEW) and the preceding pulse information (OLD). The counter circuit 8 reads out the preceding pulse information (OLD) from the nonvolatile memory 9, and performs the counting operation by using the preceding pulse information. As described above, the rotation direction (the counterclockwise direction CCW or the clockwise direction CW) of the rotation shaft 30 can be identified from the pulse information. In FIG. 5, the rotation direction identified from the pulse information is also shown.

When the updated pulse information is HP, a +1 counting-up operation is performed if the preceding state value is HN, LP or LN (i.e., other than HP). When the updated pulse information is HN, a -1 counting-down operation is performed if the preceding pulse information is HP, LP or LN (i.e., other than HN). That is, if a voltage pulse is generated when the output state of the sensor element SE is the first output state H (N-pole detection state), and the updated pulse information is different from the preceding pulse information, the counting-up operation or the counting-down operation is performed depending on the polarity (P or N) of the voltage pulse.

When the updated pulse information is LP, the -1 counting-down operation is performed only if the preceding pulse information is HP. That is, if a voltage pulse of the polarity P is generated when the sensor element SE is in the second output state L, and the preceding pulse information indicates the first output state H and the polarity P, the count value is decremented. When the updated pulse information is LN, the +1 counting operation is performed only if the preceding pulse information is HN. That is, if a voltage pulse of the polarity N is generated when the sensor element SE is in the second output state L, and the preceding pulse information indicates the first output state H and the polarity N, the count value is incremented. These counting operations, which are exceptional counting operations to be performed when the output state of the sensor element SE is the second output state L (S-pole detection state), are correcting operations to be performed to compensate for a count value update failure which may occur due to an influence of pulse missing (voltage pulse missing occurring due to the reversal of the rotation direction) to be described later.

For changes in pulse information other than those described above (others), the count value is kept unchanged (a change in count value is 0). That is, the count value is kept unchanged, if the latest pulse information is equal to the preceding pulse information, if the latest pulse information is LP and the preceding pulse information is HN or LN, or if the latest pulse information is LN and the preceding pulse information is HP or LP.

Thus, the counter circuit 8 operates to identify the rotation direction and the rotational position of the rotation shaft 30 based on the latest pulse information and the preceding pulse information, i.e., by using the output state of the sensor element SE and the polarity of the voltage pulse generated by the power generation sensor 20, and to update the count value and write the updated count value in the nonvolatile memory 9.

FIG. 6 is a diagram to be used to describe the influence of the pulse missing on the count value.

Consideration will be given to a case in which the rotation angle is changed along a path T1. That is, the rotation angle is increased across the boundary a by the rotation in the counterclockwise direction CCW, whereby a positive pulse is generated at a position 61 and the pulse information HP is generated. If the rotation direction is reversed to the clockwise direction CW before the rotation angle reaches a position at which the stabilization magnetic field is applied to the magnetic wire FE of the power generation sensor 20, the magnetic wire FE is not brought into the negative pulse generation preparatory state (SET_N) but the rotation angle is reduced across the boundary a to reach a position 62 at which the pulse information HN is to be generated. At this time, no negative pulse is generated at the position 62 (pulse missing) and, therefore, the pulse information is not updated. If the rotation angle is thereafter reduced by the rotation in the clockwise direction CW, the magnetic wire FE is brought into the positive pulse generation preparatory state (SET_P). If the rotation direction is thereafter reversed again to the counterclockwise direction CCW, the rotation angle is increased across the boundary a, whereby a positive pulse is generated again at the position 61 and the pulse information HP is generated. If the pulse information were changed from HP to HN, therefore, the counting operation should have been basically the -1 counting-down operation. Actually, however, the pulse information is changed from HP to HP, so that the count value is not changed (others in FIG. 5). That is, the pulse information change is HP → HP, but the rotation angle is at the same position. Therefore, no counting operation is performed. Where a reversal position at which the rotation is reversed from the clockwise direction CW to the counterclockwise direction CCW on the path T1 is located at around a rotation angle of 0 degree before a position at which the pulse information LP is generated (on a counterclockwise side CCW), the same scenario happens. In the scenario of the path T1, the count value of the segment counter 2 may contain an error corresponding to 1 pulse (+0.25 turn) during a period from the generation of the second pulse information HP to the ignorance of the count. Where the rotation direction is opposite to that described above (as indicated by a path T3), a similar behavior is observed, i.e., the state value change is HN → HN, and the count value is not changed (see FIG. 5). In this case, the count value may contain an error corresponding to 1 pulse (-0.25 turn). Therefore, the count value may contain an error corresponding to ±0.25 turn until the exceptional counting operation is performed. More strictly, the count value may further contain an error equivalent to a phase difference ±PS.

Next, consideration will be given to a case in which the rotation angle is changed along a path T2. If the rotation angle is increased across the boundary a by the rotation in the counterclockwise direction CCW whereby a positive pulse is generated at a position 71, the pulse information HP is generated. If the rotation direction is reversed to the clockwise direction CW before the rotation angle reaches a position at which the stabilization magnetic field is applied to the magnetic wire FE of the power generation sensor 20, the magnetic wire FE is not brought into the negative pulse generation preparatory state (SET_N) but the rotation angle is reduced across the boundary a to reach a position 72 at which the pulse information HN is to be generated. At this time, no negative pulse is generated at the position 72 (pulse missing) and, therefore, the pulse information is not updated. If the magnetic wire FE is thereafter brought into the positive pulse generation preparatory state (SET_P) and the rotation angle reaches a position 73 by further rotation in the clockwise direction CW, a positive pulse is generated and the pulse information LP is generated. If the pulse information were changed from HP to HN, therefore, the counting operation should have been basically the -1 counting-down operation. Actually, however, the pulse information is changed from HP to LP, so that the exceptional -1 counting-down operation is performed (see FIG. 5). This compensates for the influence of the pulse missing. Where the rotation direction is opposite to that described above (path T4), a similar behavior is observed. The pulse information is changed from HN to LN, and the exceptional +1 counting-up operation is performed (see FIG. 5). Until either of these exceptional counting operations is performed, the count value may contain an error corresponding to ±0.25 turn. More strictly, the count value may further contain an error equivalent to the phase difference ±PS.

It is herein assumed that an initial count value is zero (even number). In an angular range of one turn (360 degrees), a correct count value is even in an angular zone ranging from -90 degrees (+270 degrees) to +90 degrees (a right half range with respect to the boundaries a, b in FIG. 6), and is odd in an angular zone ranging from +90 degrees to +270 degrees (a left half range with respect to the boundaries a, b in FIG. 6).

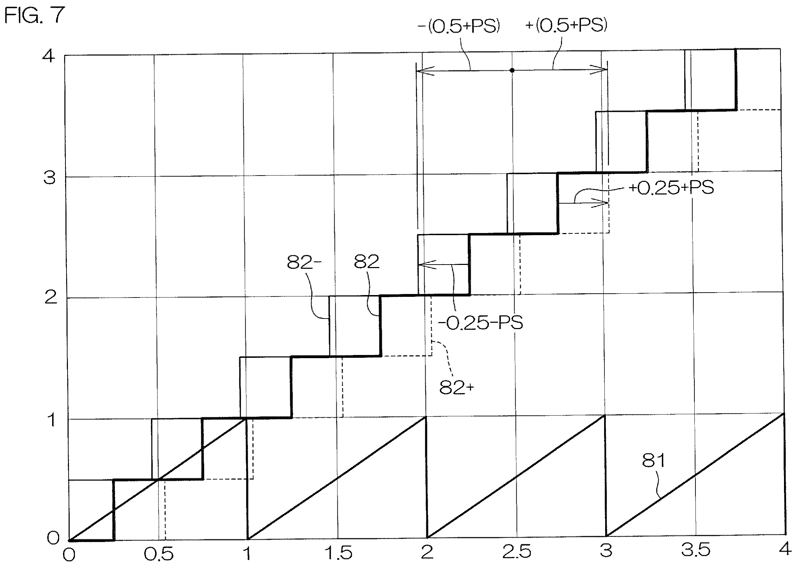

FIG. 7 shows the count value of the segment counter 2 and the angle detection value of the precision absolute angle detector 1 relative to the rotation angle of the rotation shaft 30 in a positive rotation angle range. The abscissa indicates the rotation angle of the rotation shaft 30 with one turn (360 degrees) defined as 1. The ordinate indicates the multiturn absolute angle value with one turn (360 degrees) defined as 1. In the internal processing of the arithmetic device 4, for example, the single turn range is expressed at a resolution of 16 bits (65536 steps).

As the rotation shaft 30 is rotated, the angle detection value $\theta s$ of the precision absolute angle detector 1 (hereinafter referred to simply as "absolute angle detection value $\theta s$") is changed between 0 and 1 in a serration form as indicated by a line 81.

On the other hand, the count value n (wherein n is an integer) of the segment counter 2 is converted into the number of turns, and a conversion value 0.5n resulting from the conversion is ideally changed stepwise, as indicated by a line 82, as the rotation shaft 30 is rotated. It is ideal that count values for 0.5-turn angular zones (180-degree angular zones) respectively having medians spaced 0.5 turn (180 degrees) from each other with respect to a reference angle of 0 degree are, for example, 0, 1, 2, 3, ..., and the numbers of turns corresponding to count values of 0, 1, 2, 3, ... are 0, 0.5, 1.0, 1.5, ..., respectively. Since the count of the segment counter 2 is 2 counts per each turn, a step level per each count is 0.5 turn. In this case, the quantization error is an error corresponding to 0.25 turn, at the maximum, which is one half 0.5 turn.

If the pulse missing occurs, the count value n of the segment counter 2 additionally contains an error corresponding to $\pm0.25$ turn. A line 82- in FIG. 7 indicates a conversion value resulting from the conversion of the count value n of the segment counter 2 to the number of turns where the count value n contains an error corresponding to -0.25 turn with respect to the count value n indicated by the line 82. Similarly, a line 82+ in FIG. 7 indicates a conversion value resulting from the conversion of the count value n of the segment counter 2 to the number of turns where the count value n contains an error corresponding to +0.25 turn with respect to the count value n indicated by the line 82.

The conversion value indicated by the line 82- in FIG. 7 contains the phase difference -PS (e.g., -2 degrees) of the pulse generation position in addition to the error corresponding to -0.25 turn occurring due to the pulse missing. Similarly, the conversion value indicated by the line 82+ in FIG. 7 contains the phase difference +PS (e.g., +2 degrees) of the pulse generation position in addition to the error corresponding to +0.25 turn occurring due to the pulse missing.

For example, the arithmetic device 4 performs a first step represented by the following expression (1) and a second step represented by the following expression (2) with the use of the count value n of the segment counter 2 and the absolute angle detection value $\theta s$ to combine the count value n of the segment counter 2 with the absolute angle detection value $\theta s$ to thereby compute the multiturn absolute angle detection value $\theta m$. In the following expressions (1) and (2), N indicates the number of turns (rotation amount) with respect to the reference point (rotational position origin) of the rotation shaft 30, and U indicates an angle detection amount per each turn (e.g., U = 65536 (based on 16 bits)) and corresponds to the resolution of the precision absolute angle detector 1.

[Formula 2]

$$N = INT\left\{\left(\frac{nU}{2} - \theta s\right)/U + 0.5\right\} \qquad \dots (1)$$

$$\theta m = N \times U + \theta s \qquad \dots (2)$$

First Step

In the expression (1), a conversion value nU/2 obtained by multiplying the count value n by the angle detection amount U per each turn and dividing the multiplication result by a segment number of 2 is used. The conversion value nU/2 is a value obtained by the unit conversion of the count value n to the same unit as that of the absolute angle detection value $\theta s$. Then, nU/2 - $\theta s$ is determined by subtracting the absolute angle detection value $\theta s$ from the conversion value nU/2, and is divided by the angle detection amount U for the conversion to the number of turns. Then, 0.5 is added to the resulting value, and a rounding computation is performed by an integerization function INT (a function of rounding off a decimal part for the integerization). Thus, the number N of turns is determined.

Second Step

The number N of turns thus determined in the first step is multiplied by the angle detection amount U per each turn, whereby a multiturn absolute angle detection value $\theta m$ can be determined for the count value n of the segment counter 2. The multiturn absolute angle detection value $\theta m$ indicating the precise multiturn absolute angle can be determined by adding the absolute angle detection value $\theta s$ (the precise angle detection value within the single turn) to the result of the multiplication as shown in the expression (2).

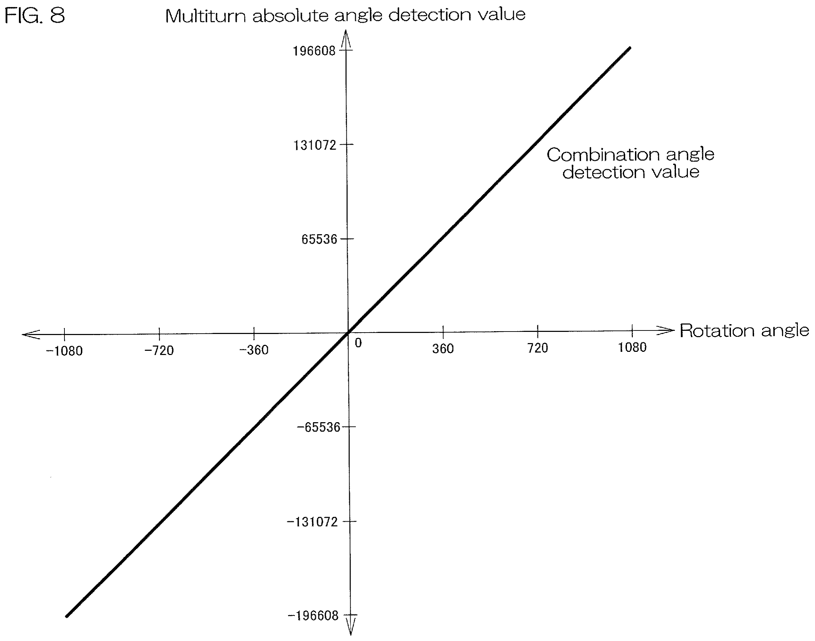

The computation result to be obtained is shown in FIG. 8 by way of example. A table preliminarily prepared may be used, as required, to perform a part or all of the aforementioned computation in the arithmetic device 4.

In the actual computation of the number N of turns, it is convenient to use the following expression (3) equivalent to the above expression (1) so as to avoid the handling of the decimal part.
[Formula 3]

$$N = INT\left\{\left(\frac{nU}{2} - \theta s + \frac{U}{2}\right) / U\right\} \qquad \dots \quad (3)$$

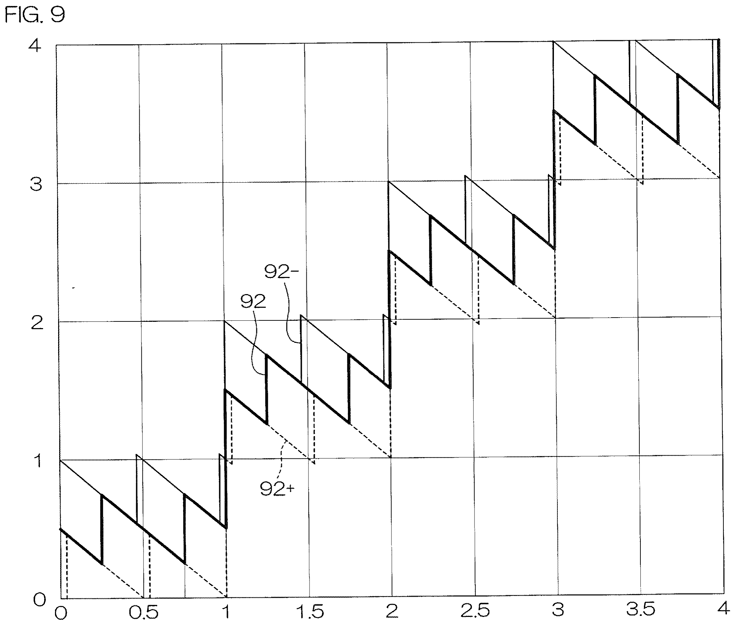

FIG. 9 shows computation results (0.5n - θ + 0.5) each obtained by subtracting the absolute angle detection value θs (the line 81 in FIG. 7) from the conversion value (multiturn angle equivalent value) (the line 82, 82-, 82+ in FIG. 7) resulting from the conversion of the count value n of the segment counter 2 to the number of turns and adding 0.5 turn to the subtraction result. The computation results each correspond to a processing target to be processed by the integerization function INT represented by the above expression (1). The computation results corresponding to the lines 82, 82-, 82+ in FIG. 7 are indicated by lines 92, 92-, 92+, respectively. As shown, stepwise lines each indicating a serrate change in a one-turn range are provided.

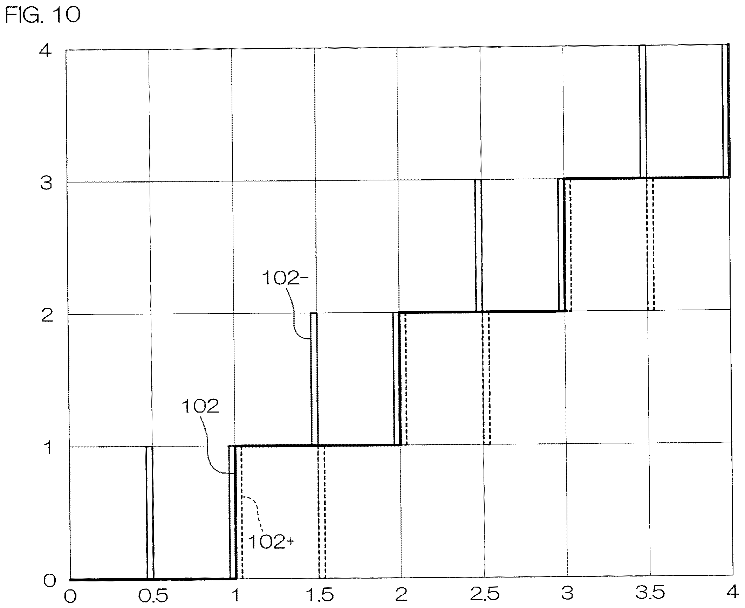

Computation results obtained by processing the computation results of FIG. 9 by an integerization operator INT (an operator of rounding off a decimal part) are shown in FIG. 10. The computation results each correspond to the processing result of the above expression (1). The computation results corresponding to the lines 92, 92-, 92+ in FIG. 9 are indicated by lines 102, 102-, 102+, respectively. An ideal computation result is indicated by the line 102. On the other hand, the computation results indicated by the lines 102-, 102+ mean that an error of ±1 turn occurs in the number N of turns for every 0.5 turn (i.e., for every 180 degrees) due to the phase differences ±PS of the pulse generation position.

That is, when the processing target to be subjected to the integerization process contains an error corresponding to not less than 0.5 turn, the number N of turns resulting from the integerization process contains an error of ±1.

In this example embodiment, therefore, the arithmetic device 4 performs the correcting process, as required, when the multiturn absolute angle detection value θm is determined by combining the count value n of the segment counter 2 with the absolute angle detection value θs. The correcting process to be performed on the count value n will hereinafter be described.

FIGS. 9 and 10 indicate that the number N of turns suffers from an error when the rotation angle (the conversion value resulting from the conversion of the rotation angle to the number of turns) is around 0 degree, 180 degrees, 360 degrees, 450 degrees, ... at an interval of 180 degrees (i.e., around 0, 0.5, 1.0, 1.5, ...). That is, when the rotation angle belongs to an angular range A1 of 0 degree ± PS and an angular range A2 of 180 degrees ± PS as shown in FIG. 6, the number N of turns may contain an error. That is, when the absolute angle detection value θs belongs to either one of the two angular ranges A1, A2 each including a rotational position at which a voltage pulse is generated with the sensor element SE in the second output state (S-pole detection state), the number N of turns is liable to contain an error.

Therefore, when an absolute angle detection value θs outputted by the precision absolute angle detector 1 immediately after the power source is turned on belongs to either one of the angular ranges A1, A2, the arithmetic device 4 determines whether or not the absolute angle detection value θs is consistent with the count value n acquired from the segment counter 2 immediately after the turn-on of the power source. Specifically, the arithmetic device 4 determines whether or not the even-odd identity of the count value n is consistent with the absolute angle detection value θs. Since the angular range A1 is present in the angular zone ranging from -90 degrees (+270 degrees) to +90 degrees, a correct count value n is even. Since the angular range A2 is present in the angular zone ranging from +90 degrees to +270 degrees, a correct count value n is odd . If the count value n and the absolute angle detection value θs have a relationship other than that described above, the count value n and the absolute angle detection value θs are inconsistent.

When the count value n and the absolute angle detection value θs are inconsistent, the arithmetic device 4 determines the correcting direction based on the preceding voltage pulse polarity contained in the pulse information read out from the nonvolatile memory 9 (the preceding voltage pulse polarity determined from the information read out from the nonvolatile memory 9), and corrects the count value n according to the correcting direction thus determined. If the voltage pulse polarity is positive (P), the arithmetic device 4 performs the correcting process to subtract a predetermined correction amount (e.g., 1) from the count value n. If the voltage pulse polarity is negative (N), the arithmetic device 4 performs the correcting process to add a predetermined correction amount (e.g., 1) to the count value n. That is, the correcting direction (an adding direction or a subtracting direction) is determined based on the preceding voltage pulse polarity, and the correction amount (> 0, e.g., 1) is added to or subtracted from the count value n depending on the determination result.

In this example, the correction amount for the count value n is set to 1. However, the correction amount for the count value n is not necessarily required to be set to 1, because it is merely necessary that the number N of turns determined through the integerization process is correct. If the correction amount is allowed to include a decimal part, the correction amount may be selected, for example, from a range of 0.5 < correction amount < 1.5. More accurately, the correction amount can be selected from a range of PS < correction amount < PS + 2.

Specifically, the inconsistency between the count value n and the absolute angle detection value θs occurs when the pulse missing occurs and the exceptional counting operation (rows of the pulse information LP, LN in FIG. 5) is not performed for compensation for the pulse missing. In the case of the path T2 or T4 in FIG. 6, for example, the inconsistency is liable to occur when the position 73, 74 is not reached within the angular range A1 at the turn-on of the power source. Therefore, when the preceding voltage pulse polarity is positive (P), the pulse information is HP and, when the preceding voltage pulse polarity is negative (N), the pulse information is HN.

In the case of the path T1, T3, for example, the count value n and the absolute angle detection value $\theta$s are sometimes inconsistent at the turn-on of the power source, but the correction of the count value n is not required because the number N of turns obtained by the processing based on the expression (1) suffers from no error. In the case of the path T1, T3, however, the correcting process described above may be performed. Therefore, the angular range A1 may be wider than an angular range of 0 degree $\pm$ PS and, similarly, the angular range A2 may be wider than an angular range of 180 degrees $\pm$ PS.

Specifically, the angular range A1 may be set so as to include a range of 0 degree $\pm$ PS and so as to be greater than - 90 degrees (+270 degrees) + PS and smaller than +90 degrees - PS. Further, the angular range A2 may be set so as to include a range of 180 degrees $\pm$ PS and so as to be greater than 90 degrees + PS and smaller than +270 degrees - PS. Where the phase difference is PS = 2 degrees, for example, a tolerance $\beta$ (e.g., $\beta$ = 1 degree) may be provided for the phase difference. Thus, the angular range A1 is set to a range (0 degree $\pm$ (PS + $\beta$)) of not less than -3 degrees (+357 degrees) and not greater than +3 degrees, and the angular range A2 is set to a range (180 degrees $\pm$ (PS + $\beta$)) of not less than 177 degrees and not greater than 183 degrees, whereby the correcting process can be reliably performed in necessary and sufficient ranges to correctly determine the number N of turns.

As described above, the power generation sensor 20 is configured so that the phase difference PS is very small. Therefore, the angular ranges A1, A2 in which the correcting process is required can be narrowed. This obviates the need for the correcting process in most of the one-turn angular range.

In addition, the segment counter 2 and the arithmetic device 4 perform the signal processing operation based on the angle detection origin (0 degree) defined at the middle position between the position at which the voltage pulse of the positive polarity is generated (the position for the pulse information LP) and the position at which the voltage pulse of the negative polarity is generated (the position for the pulse information LN) when the sensor element SE is in the second output state L (see FIG. 6). Therefore, the absolute values of the phase differences PS of the voltage pulse generation positions with respect to the segment boundary a, b in the opposite rotation directions are equal to each other, so that the two angular ranges A1, A2 in which the correcting process is required can be narrowed.

As can be understood from the expression (1), the same result can be provided not only by performing the correcting process on the count value n, but also by properly performing the correcting process on any one of the conversion value (n/2) resulting from the conversion of the count value n to the number of turns, the multiturn angle value (nU/2) corresponding to the count value n, the difference (nU/2 - $\theta$s) between the multiturn angle value and the absolute angle detection value $\theta$s, the value (nU/2 - $\theta$s)/U resulting from the division of the difference (nU/2 - $\theta$s) by the angle detection amount U, and the value resulting from the addition of a constant of 0.5 to the value (nU/2 - $\theta$s)/U for the rounding.

Further, it is possible to correct the number N of turns resulting from the integerization process based on the pulse information, instead of performing the correction before the integerization process. That is, if the even-odd identity of the number N of turns is not consistent with the absolute angle detection value $\theta$s when the absolute angle detection value $\theta$s belongs to either one of the angular ranges A1, A2, the correcting direction (addition or subtraction) may be determined based on the pulse polarity contained in the preceding pulse information, and the correction amount (typically, 1) may be added to or subtracted from the number N of turns for the correction depending on the correcting direction thus determined.

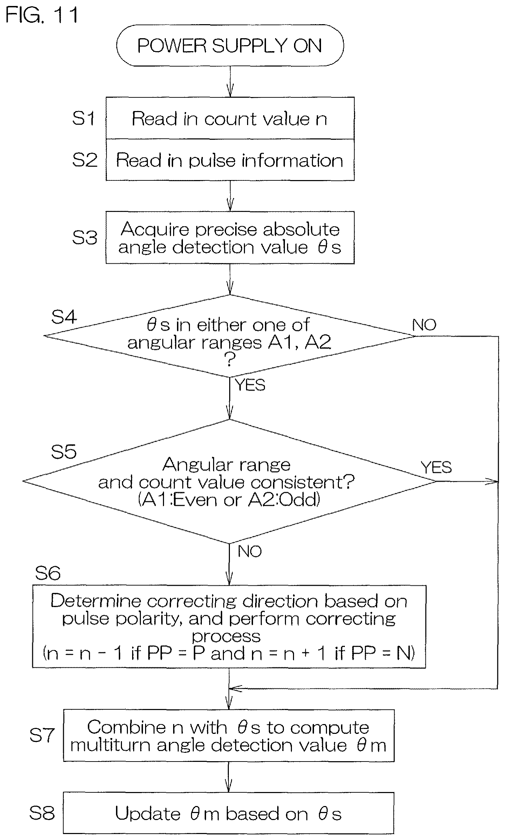

FIG. 11 is a flowchart showing an exemplary process to be performed by the arithmetic device 4.

When the external power source is turned on and the electric power supply from the power supply circuit 3 is started, the arithmetic device 4 reads out and acquires the count value n and the pulse information from the nonvolatile memory 9 of the segment counter 2 (Steps S1, S2). Since the operation of the precision absolute angle detector 1 is also started by the turn-on of the external power source, the arithmetic device 4 acquires the absolute angle detection value $\theta$s outputted from the precision absolute angle detector 1 (Step S3).

The arithmetic device 4 determines whether or not the absolute angle detection value $\theta$s belongs to either one of the angular ranges A1 and A2 (Step S4). If the determination is affirmative, the arithmetic device 4 further determines whether or not the even-odd identity of the count value n is consistent with either one of the angular range A1, A2 (Step S5). That is, if the absolute angle detection value $\theta$s belongs to the angular range A1 and the count value n is even or if the absolute angle detection value $\theta$s belongs to the angular range A2 and the count value n is odd, the arithmetic device 4 determines that the count value n and the absolute angle detection value $\theta$s are consistent and, otherwise, determines that the count value n and the absolute angle detection value $\theta$s are inconsistent. If the inconsistency is determined (NO in Step S5), the arithmetic device 4 performs the correcting process described above. That is, the correcting direction (whether the correction amount is to be added or subtracted) is determined based on the pulse information (more specifically, based on the preceding voltage pulse polarity contained in the pulse information), and the correcting process is performed according to the determination result (Step S6). That is, if the pulse polarity PP contained in the pulse information is positive (P), a correction amount of 1 is subtracted from the count value n. If the pulse polarity PP is negative (N), a correction amount of 1 is added to the count value n. Then, the arithmetic device 4 calculates the multiturn absolute angle detection value θm based on the result of the correction by combining the count value n of the segment counter 2 with the absolute angle detection value θs outputted by the precision absolute angle detector 1 (Step S7). If the absolute angle detection value θs belongs to neither of the angular ranges A1, A2 (NO in Step S4), the correcting process (Step S6) is skipped. Further, if the angular range A1, A2 is consistent with the count value n (YES in Step S5), the correcting process (Step S6) is skipped. In these cases, the multiturn absolute angle detection value θm is calculated by using the count value n as it is (without performing the correcting process) (Step S7).

The multiturn absolute angle detection value θm thus determined is used as the initial value. The multiturn absolute angle detection value θm is updated based on the absolute angle detection value θs thereafter outputted by the precision absolute angle detector 1 at a predetermined control cycle (Step S8). This operation is continued until the external power source is turned off.

In this example embodiment, as described above, the segment counter 2 includes the sole power generation sensor 20 and the sensor element SE, and is configured so as to apply the two-cycle alternating magnetic field per each turn to the magnetic wire FE of the power generation sensor 20. With this arrangement, the count value of the segment counter 2 can be properly combined with the absolute angle detection value θs generated by the precision absolute angle detector 1, whereby the precise multiturn absolute angle detection value θm can be provided. This obviates the need to use a plurality of power generation sensors 20.

As described above, the arithmetic device 4 performs the correcting process, as required, when combining the count value n with the absolute angle detection value θs. However, this correcting process is a simple process such that the correction amount is added to or subtracted from the count value n depending on the correcting direction determined with the use of the pulse information (more specifically, the preceding voltage pulse polarity).

In PTL 2 and PTL 3, the magnetization state is determined when the external power source is turned on, and the count value of the segment counter is corrected to be synchronized with the angle detection value of the precision absolute angle detector. Particularly, the determination of the magnetization state is complicated, which is achieved by gradually increasing the electric current flowing through the coil of the power generation sensor, applying the magnetic field generated by the coil to the magnetic wire, and observing the voltage appearing between the opposite ends of the coil to monitor whether or not the magnetization direction of the magnetic wire is reversed.

In this example embodiment, the count value of the segment counter 2 can be properly combined with the absolute angle detection value θs by the simple computation using the pulse information without the need for the complicated process for the determination of the magnetization state as disclosed in PTL 2 and PTL 3. Thus, the precision multiturn absolute angle detection device can be provided, which is simplified in configuration and process and, therefore, is reduced in size and costs, and yet has a higher resolution.

Table 1 shows the estimated errors of segment counters of various examples with different settings of the cycle number of the alternating magnetic field per each turn, the voltage pulse number per each turn and the segment number per each turn.

[Table 1]

[Table 1]

| | Cycle number | Pulse number | Segment number | Step angle | Errors | | | |
|---|---|---|---|---|---|---|---|---|
| | | | | | Step error | Pulse missing error | Phase difference | Total |
| Example 1 | 1 | 2 | 1 | 1.000 | 0.500 | 0.500 | PS | ±(1.000 + PS) |
| Example 2 | 1 | 2 | 2 | 0.500 | 0.250 | 0.500 | PS | ±(0.750 + PS) |
| Example 3 | 2 | 4 | 2 | 0.500 | 0.250 | 0.250 | PS | ±(0.500 + PS) |
| Example 4 | 2 | 4 | 4 | 0.250 | 0.125 | 0.250 | PS | ±(0.375 + PS) |
| Example 5 | 3 | 6 | 3 | 0.333 | 0.167 | 0.167 | PS | ±(0.333 + PS) |
| Example 6 | 3 | 6 | 6 | 0.167 | 0.083 | 0.167 | PS | ±(0.250 + PS) |

In Example 1, a one-cycle alternating magnetic field per each turn is applied to the magnetic wire, and the power generation sensor correspondingly generates two voltage pulses. The counting operation is performed once for the two voltage pulses (i.e., the segment number is 1). The angle of each segment (for each count) is 360 degrees, and the step angle which is determined by converting the angle of each segment into the number of turns is 1 (turn). In Table 1, the unit of the angle is based on the number of turns. The step error (quantization error) of the count value occurring due to the step angle is 0.5 (turn) which is one half the step angle. Further, an error of 0.5 (turn) occurs due to the pulse missing, because the cycle number of the alternating magnetic field per each turn is 1 cycle. Further, the phase difference PS (see FIG. 3B) is also a factor of the error. Therefore, the total error is $\pm(1.0 + PS)$ turns.

In Example 2, a one-cycle alternating magnetic field per each turn is applied to the magnetic wire, and the power generation sensor correspondingly generates two voltage pulses. The counting operation is performed twice for the two voltage pulses (i.e., the segment number is 2). The angle of each segment (for each count) is 180 degrees, and the step angle which is determined by converting the angle of each segment into the number of turns is 0.5 (turn). Therefore, the step error (quantization error) is 0.25 (turn) which is one half the step angle. An error of 0.5 (turn) occurs due to the pulse missing. Therefore, the total error including the phase difference PS is $\pm(0.75 + PS)$ turn.

In Example 3, a two-cycle alternating magnetic field per each turn is applied to the magnetic wire, and the power generation sensor correspondingly generates four voltage pulses. The counting operation is performed twice for the four voltage pulses (i.e., the segment number is 2). Example 3 corresponds to the example embodiment described above. The angle of each segment (for each count) is 180 degrees, and the step angle which is determined by converting the angle of each segment into the number of turns is 0.5 (turn). Therefore, the step error (quantization error) is 0.25 (turn) which is one half the step angle. An error of 0.25 (turn) occurs due to the pulse missing, because the cycle number of the alternating magnetic field per each turn is 2 cycles. Therefore, the total error including the phase difference PS is $\pm(0.5 + PS)$ turn (see FIG. 7).

In Example 4, a two-cycle alternating magnetic field per each turn is applied to the magnetic wire, and the power generation sensor correspondingly generates four voltage pulses. The counting operation is performed four times for the four voltage pulses (i.e., the segment number is 4). The angle of each segment (for each count) is 90 degrees, and the step angle which is determined by converting the angle of each segment into the number of turns is 0.25 (turn). Therefore, the step error (quantization error) is 0.125 (turn) which is one half the step angle. An error of 0.25 (turn) occurs due to the pulse missing, because the cycle number of the alternating magnetic field per each turn is 2 cycles. Therefore, the total error including the phase difference PS is $\pm(0.375 + PS)$ turn.

In Example 5, a three-cycle alternating magnetic field per each turn is applied to the magnetic wire, and the power generation sensor correspondingly generates six voltage pulses. The counting operation is performed three times for the six voltage pulses (i.e., the segment number is 3). The angle of each segment (for each count) is 120 degrees, and the step angle which is determined by converting the angle of each segment into the number of turns is 0.333 (turn). Therefore, the step error (quantization error) is 0.167 (turn) which is one half the step angle. An error of 0.167 (turn) occurs due to the pulse missing, because the cycle number of the alternating magnetic field per each turn is 3 cycles. Therefore, the total error including the phase difference PS is $\pm(0.333 + PS)$ turn.

In Example 6, a three-cycle alternating magnetic field per each turn is applied to the magnetic wire, and the power generation sensor correspondingly generates six voltage pulses. The counting operation is performed six times for the six voltage pulses (i.e., the segment number is 6). The angle of each segment (for each count) is 60 degrees, and the step angle which is determined by converting the angle of each segment into the number of turns is 0.167 (turn). Therefore, the step error (quantization error) is 0.083 (turn) which is one half the step angle. An error of 0.167 (turn) occurs due to the pulse missing, because the cycle number of the alternating magnetic field per each turn is 3 cycles. Therefore, the total error including the phase difference PS is $\pm(0.250 + PS)$ turn.

The power generation sensor outputs one positive pulse and one negative pulse, a total of two pulses, per each cycle of the alternating magnetic field. Conceivable configurations for the segment counter include a configuration in which either one of the positive pulse and the negative pulse is counted so that the segment number is one half the pulse number (Example 1, Example 3 and Example 5) and a configuration in which all the pulses are counted so that the segment number is the same as the pulse number (Example 2, Example 4 and Example 6). In order to increase the segment number, it is conceivable to count both of the positive pulse and the negative pulse or to increase the cycle number of the alternating magnetic field per each turn.

Where a highly-precise single-turn absolute angle detection value (θs) is combined with the count value (n) of the segment counter, the number (N) of turns on a one-turn basis is calculated from the two values, and the single-turn absolute angle detection value (θs) is added to the number (N) of turns. The required accuracy of the number (N) of turns to be calculated is less than 0.5 turn. Out of the two values to be used for the calculation of the number (N) of turns, the single-turn absolute angle detection value (θs) has a smaller error, which is negligible. Therefore, the allowable error of the count value (n) of the segment counter is within $\pm 0.5$ turn. That is, the total errors in Table 1 are required to be within $\pm 0.5$ turn.

In Example 1, Example 2 and Example 3, the total errors fall outside $\pm 0.5$ turn. If the count value (n) of the segment counter is used as it is, therefore, the number (N) of turns contains an error of $\pm 1$ turn. In Example 1 and Example 2 in which the cycle number is 1, the signal processing method in which the segments of the counter are each further divided into subsegments (see PTL 2 and PTL 3) can be used by acquiring the information about the magnetization state of the magnetic wire of the power generation sensor (for the determination of the magnetization direction). However, an additional circuit is required for the determination of the magnetization direction, and the process for the determination of the magnetization direction is complicated. This results in cost increase. In addition, it is necessary to stop the rotation during the process for the determination of the magnetization direction.

If the segment number per each turn is not less than three, as seen in Example 4, Example 5 and Example 6, the accuracy of the segment counter can be improved with an allowable error of less than 0.5 turn. Therefore, the number of turns can be determined by using the count value (n) of the segment counter as it is.

However, the nonvolatile memory that stores the count value (n) of the segment counter has a limited bit capacity. Therefore, the maximum countable value of the number (N) of turns is reduced, as the segment number is increased. Since the computation is performed on a binary basis in the signal processing operation, it is convenient that the segment number is 2 or a power of 2, and it is most convenient that the segment number is 2. In Example 5 and Example 6 in which the segment number has a prime factor of 3, the signal processing operation is generally complicated.

Therefore, a segment number of 2 (Example 2 and Example 3) is optimum and versatile. The total error is smaller in Example 3 than in Example 2. It is merely necessary to correct an error corresponding to the phase difference ±PS, so that the correcting process can be easily performed. That is, in Example 3 corresponding to the above example embodiment, the number N of turns substantially free from the error can be determined by the simple correcting process as described above.

While the example embodiment of the present invention has thus been described, the present invention can be embodied in some other ways to be described below by way of example.

In the example embodiment described above, the pulse information indicating the output state of the sensor element SE and the polarity of the voltage pulse generated by the power generation sensor 20 is stored in the nonvolatile memory 9. When the power generation sensor 20 generates a voltage pulse, the count value is updated based on the pulse information and the preceding pulse information. However, the information to be stored in the nonvolatile memory 9 is not necessarily required to be the pulse information itself, i.e., the combination of the output state of the sensor element SE and the voltage pulse polarity, but may be information that can identify the output state of the sensor element SE and the voltage pulse polarity. Specifically, the information may include any two or all (three) of the output state of the sensor element SE, the voltage pulse polarity, and the rotation direction determined based on the output state of the sensor element SE and the voltage pulse polarity. With two of these, the remaining one of these can be identified. If the output state of the sensor element SE is L and the voltage pulse polarity is N, the rotation direction is identified as CCW. In this case, the information to be stored in the nonvolatile memory 9 may be a combination of the output state L of the sensor element SE and the rotation direction CCW, or may be a combination of the voltage pulse polarity N and the rotation direction CCW. In the counting process, a combination (L, N), the combination (L, CCW) and the combination (N, CCW) are mathematically equivalent to each other. Even if the information identifiable of the pulse information other than the aforementioned information is stored in the nonvolatile memory 9, substantially the same process as in the aforementioned example embodiment can be performed. In the counting operation to be performed by the segment counter according to the present invention, the conditions for the output state of the sensor element SE and the voltage pulse polarity include conditions defined by directly using information about the output state of the sensor element SE and the voltage pulse polarity, and further include equivalent conditions that can be mathematically derived from some other information.

The arithmetic device 4 performs the computing process by using the information identifiable of the pulse information stored in the nonvolatile memory 9. In the correcting process, the arithmetic device 4 reads the information identifiable of the pulse information from the nonvolatile memory 9 (Step S2 in FIG. 11), and determines the preceding voltage pulse polarity based on the read information to determine the correcting direction based on the determined polarity (Step S6).

In the example embodiment described above, the magnetic field generation source is constituted by the four magnetic poles of the four separate magnets by way of example, but may be constituted by a ring-shaped multipole magnetization magnet surrounding the rotation axis 33. For example, a ring-shaped hard magnetic body formed with four magnetic poles by defining local magnetization regions (four magnetization regions) in circumferentially spaced relation at the same positions as the magnets M1 to M4 therein may be used as the magnetic field generation source. The magnetization directions are parallel to the rotation axis 33. The four-pole magnetization magnet thus provided is configured so that the N-poles and the S-poles of the four magnetic poles are alternately arranged circumferentially about the rotation axis 33 as seen in one direction along the rotation axis 33. The arrangement interval $\lambda$ of the four magnetic poles (magnetization regions) on the track 51 is preferably greater than the overall length Lw of the magnetic wire FE, more preferably not less than 1.5 times the overall length Lw of the magnetic wire FE. Further, the length $\alpha$ of each of the magnetic poles (magnetization regions) on the track 51 (as measured along the track 51) is preferably shorter than the overall length Lw of the magnetic wire FE, and not greater than 50% of the arrangement interval $\lambda$ of the magnetic poles. The length $\alpha$ of each of the magnetic poles on the track 51 is preferably not greater than one half the overall length Lw of the magnetic wire FE.

The magnetic poles are not necessarily required to be of the magnets (magnetized hard magnetic body).

Alternatively, for example, a magnetically soft body (yoke) that induces magnetic fluxes from magnets may be provided, so that a surface (typically, an edge surface) thereof can serve as the magnetic poles.

In the example embodiment described above, the axis-orthogonal portions of the magnetic flux conducting pieces each include a first portion extending from the magnetic wire FE toward the detection region SR, and a second portion extending from the magnetic wire FE away from the detection region SR, but the second portion may be obviated. Even in this case, the magnetic flux conducting function (magnetic flux collecting function) is not generally influenced.

In the example embodiment described above, the power generation sensor 20 including the L-shaped magnetic flux conducting pieces FL1, FL2 is used by way of example, but the magnetic flux conducting pieces may each have some other shape. For example, I-shaped magnetic flux conducting pieces each extending linearly from the magnetic wire FE toward the detection region may be used. Further, tubular magnetic flux conducting pieces each having substantially the same size as the coil may be provided on the opposite ends of the magnetic wire.

Further, the precision absolute angle detector 1 does not necessarily mean a single detector, but is merely required to function to determine an absolute angle within a single turn. For example, the precision absolute angle detector 1 may include a plurality of detectors each having a detection range of not greater than a single turn. For example, an angle based on 1 cycle/turn may be determined through computation by using the detection signal of a detector based on 32 cycles/turn and the detection signal of a detector based on 31 cycles/turn. Even in this case, the computation may be performed by the arithmetic device 4.

Other various modifications may be made within the scope of the claims.

DESCRIPTION OF REFERENCE CHARACTERS

1: Precision absolute angle detector
2: Segment counter
3: Power supply circuit
4: Arithmetic device
5: Signal evaluation circuit
6: Rectification/power supply circuit
7: Signal processing circuit
8: Counter circuit
9: Nonvolatile memory
10: Counter memory IC
20: Power generation sensor
30: Rotation shaft
31: First support
32: Second support
33: Rotation axis
50: Magnetic field generation source
100: Multiturn angle detection device
FE: Magnetic wire
FL1: First magnetic flux conducting piece
FL2: Second magnetic flux conducting piece
M1, M2, M3, M4: Magnets
SE: Sensor element
SP: Coil
SR: Detection region
n1, n2: N-poles
s1, s2: S-poles
Lw: Overall length of magnetic wire
x: Axis direction
$\lambda$: Arrangement interval of magnetic poles
$\alpha$: Length of magnetic pole

**Claims**

**1.** A multiturn angle detection device which generates a multiturn absolute angle detection value of a rotating body that is rotated about a rotation axis, the multiturn angle detection device comprising:

a segment counter to generate a count value according to the rotation of the rotating body by counting segments defined by dividing a single-turn cycle of the rotating body into two in an angular range over a single turn of the rotating body;

a precision absolute angle detector, which is operative with external electric power supply, to generate an absolute angle detection value within the single-turn cycle of the rotating body at a resolution higher than the segments; and

an arithmetic device, which is operative with the external electric power supply, to generate the multiturn absolute angle detection value of the rotating body by combining the count value of the segment counter with the absolute angle detection value of the precision absolute angle detector;

wherein the segment counter includes a single power generation sensor, a magnetic field generation source to be rotated together with the rotating body about the rotation axis, a sensor element provided separately from the power generation sensor and adapted to assume either one of a first output state and a second output state depending on a rotational position of the rotating body, and a nonvolatile memory to store the count value;

wherein the power generation sensor includes a magnetic wire that exhibits a large Barkhausen effect, and a coil wound around the magnetic wire;

wherein the magnetic field generation source applies a two-cycle alternating magnetic field per each turn of the rotating body axially of the magnetic wire as the rotating body is rotated, and the power generation sensor correspondingly generates four voltage pulses per each turn of the rotating body;

wherein the segment counter is operative with an energy of the voltage pulses generated by the power generation sensor without receiving an external electric power supply;

wherein, when the power generation sensor generates a voltage pulse, the segment counter identifies a rotation direction and a rotational position of the rotating body based on pulse information indicating an output state of the sensor element and a polarity of the voltage pulse generated by the power generation sensor, and stores information identifiable of the pulse information in the nonvolatile memory, and the segment counter updates the count value by using the pulse information and information identifiable of pulse information obtained at preceding voltage pulse generation, and stores the updated count value in the nonvolatile memory;

wherein the segment counter updates the count value by incrementing the count value if the pulse information is different from the pulse information obtained at the preceding voltage pulse generation when the power generation sensor generates a voltage pulse of a first polarity with the sensor element in the first output state, and by decrementing the count value if the pulse information is different from the pulse information obtained at the preceding voltage pulse generation when the power generation sensor generates a voltage pulse of a second polarity with the sensor element in the first output state, whereby the segment counter performs a counting operation twice per each turn of the rotating body;

wherein, if a count value update failure occurs in which the count value is not updated due to an influence of voltage pulse missing caused by reversal of the rotation direction when the sensor element is in the second output state, the segment counter corrects the count value for compensation for the count value update failure;

wherein the arithmetic device uses the count value and the information identifiable of the pulse information stored in the nonvolatile memory to combine the count value of the segment counter with the absolute angle detection value of the precision absolute angle detector when receiving the external electric power supply, and generates the multiturn absolute angle detection value of the rotating body;

wherein, when the absolute angle detection value belongs to either one of two predefined angular ranges each including a rotational position at which the voltage pulse is generated with the sensor element in the second output state, and the absolute angle detection value and the count value to be combined with each other are inconsistent, the arithmetic device determines a correcting direction based on a preceding voltage pulse polarity determined from the information identifiable of the pulse information to perform a correcting process.

2. The multiturn angle detection device according to claim 1, wherein the segment counter corrects the count value so as to compensate for the count value update failure occurring due to the influence of the voltage pulse missing caused by the reversal of the rotation direction by:

decrementing the count value if the pulse information generated at the preceding voltage pulse generation indicates the first output state and the first polarity when the power generation sensor generates the voltage pulse of the first polarity with the sensor element in the second output state; and

incrementing the count value if the pulse information generated at the preceding voltage pulse generation indicates the first output state and the second polarity when the power generation sensor generates the voltage pulse of the second polarity with the sensor element in the second output state.

3. The multiturn angle detection device according to claim 1 or 2, wherein the information identifiable of the pulse information includes information about two or more of the sensor element output state, the voltage pulse polarity, and the rotation direction identified based on the pulse information.

4. The multiturn angle detection device according to any one of claims 1 to 3, wherein the sensor element includes a magnetic sensor that is responsive to a magnetic field generated by the magnetic field generation source.

5. The multiturn angle detection device according to any one of claims 1 to 4, wherein a signal processing operation is performed based on an angle detection origin defined at a middle position between a position at which the voltage pulse of the first polarity is generated and a position at which the voltage pulse of the second polarity is generated when the sensor element is in the second output state.

6. The multiturn angle detection device according to any one of claims 1 to 5, wherein the arithmetic device performs:

   a first step of determining a number of turns by expressing the absolute angle detection value and the count value read out from the nonvolatile memory in a same unit, subtracting one of the absolute angle detection value and the count value from the other, converting a result of the subtraction into a unit of the number of turns and integerizing the subtraction result; and
   a second step of determining the multiturn absolute angle detection value by expressing the number of turns determined in the first step and the absolute angle detection value in a same unit, and summing the number of turns and the absolute angle detection value.

7. The multiturn angle detection device according to claim 6, wherein the arithmetic device performs the correcting process on a value to be integerized in the first step or on the number of turns determined by the integerization in the first step based on the determined correcting direction.

8. The multiturn angle detection device according to any one of claims 1 to 7,

   wherein the power generation sensor includes magnetic flux conducting pieces of a magnetically soft material provided in pair symmetrically with respect to a symmetry plane defined at an axially middle point of the magnetic wire,
   wherein the magnetic flux conducting pieces provided in pair respectively include axis-orthogonal portions provided in pair as extending parallel to each other from opposite ends of the magnetic wire in an axis-orthogonal direction orthogonal to the axis direction, and axis-parallel portions provided in pair as extending from distal ends of the axis-orthogonal portions toward each other in the axis direction with adjacent ends thereof disposed in opposed spaced relation to each other in the axis direction, and the axis-orthogonal portions respectively have wire placement portions each formed with a hole or a groove extending therethrough in the axis direction, so that opposite end portions of the magnetic wire are respectively fixed to the wire placement portions,
   wherein the power generation sensor is configured such that a region opposite from the magnetic wire with respect to the axis-parallel portions is defined as a detection region,
   wherein the magnetic field generation source includes four magnetic poles fixed to the rotating body so as to be moved along a track partly extending in the axis direction of the magnetic wire and sequentially enter the detection region such that the magnetic poles of different polarities are to be alternately brought into opposed spaced relation to the power generation sensor as the rotating body is rotated,
   wherein magnetic fluxes of the magnetic poles are applied perpendicularly to a movement direction of the magnetic poles, and intersect the magnetic wire when the magnetic poles are each brought into opposed relation to the power generation sensor,
   wherein an arrangement interval of the four magnetic poles on the track is greater than an overall length of the magnetic wire,
   wherein the magnetic poles each have a length that is shorter than the overall length of the magnetic wire as measured on the track and is not greater than 50% of the arrangement interval.

FIG. 1

EP 4 692 733 A1

FIG. 2A

FIG. 2B

FIG. 2C

FIG. 3A

2

FIG. 3B

FIG. 4

FIG. 5

| NEW | OLD | Counter operation |
|---|---|---|
| HP(CCW) | HN(CW) | +1 |
| | LP(CW) | +1 |
| | LN(CCW) | +1 |
| HN(CW) | HP(CCW) | −1 |
| | LP(CW) | −1 |
| | LN(CCW) | −1 |
| LP(CW) | HP(CCW) | −1 |
| LN(CCW) | HN(CW) | +1 |
| others | others | O |

FIG. 6

FIG. 7

EP 4 692 733 A1

FIG. 8

Multiturn absolute angle detection value

Combination angle detection value

Rotation angle

196608
131072
65536
0
−65536
−131072
−196608

−1080
−720
−360
360
720
1080

FIG. 9

FIG. 10

FIG. 11

```
            ( POWER SUPPLY ON )
                     │
                     ▼
   S1  │ Read in count value n          │
   S2  │ Read in pulse information      │
                     │
                     ▼
   S3  │ Acquire precise absolute        │
       │ angle detection value θs        │
                     │
                     ▼
   S4        θs in either one of          NO
          angular ranges A1, A2  ─────────────┐
                     ?                          │
                   │YES                         │
                   ▼                            │
   S5          Angular range                   │
          and count value consistent?    YES   │
          (A1:Even or A2:Odd)  ───────────────►│
                   │NO                          │
                   ▼                            │
   S6 │ Determine correcting direction based on │
      │ pulse polarity, and perform correcting  │
      │                 process                  │
      │ (n = n - 1 if PP = P and n = n + 1 if PP = N) │
                     │                          │
                     ▼◄─────────────────────────┘
   S7 │ Combine n with θs to compute             │
      │ multiturn angle detection value θm       │
                     │
                     ▼
   S8 │ Update θm based on θs                     │
```

## INTERNATIONAL SEARCH REPORT

| International application No. |
|---|
| **PCT/JP2024/043404** |

**A. CLASSIFICATION OF SUBJECT MATTER**

***G01D 5/245***(2006.01)i; ***G01D 5/244***(2006.01)i
FI: G01D5/245 W; G01D5/244 B

According to International Patent Classification (IPC) or to both national classification and IPC

**B. FIELDS SEARCHED**

Minimum documentation searched (classification system followed by classification symbols)

G01D5/00-G01D5/252; G01D5/39-G01D5/62; G01B7/00-G01B7/34; G01P1/00-G01P3/80; G01P13/00-G01P13/04; H02P6/00-H02P6/34

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-187941 A (ORIENTAL MOTOR CO., LTD.) 20 December 2022 (2022-12-20) paragraphs [0011]-[0050], fig. 1-7 | 1-8 |
| A | WO 2023/140000 A1 (MITSUBISHI ELECTRIC CORPORATION) 27 July 2023 (2023-07-27) paragraphs [0012]-[0154], fig. 1-15 | 1-8 |
| A | JP 2013-44606 A (HIROSE ELECTRIC CO., LTD.) 04 March 2013 (2013-03-04) paragraphs [0032]-[0261], fig. 1-26 | 1-8 |
| A | US 2015/0130450 A1 (FRITZ KUBLER GMBH ZAHL- UND SENSORTECHNIK) 14 May 2015 (2015-05-14) paragraphs [0077]-[0237], fig. 1-18 | 1-8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 January 2025** | **10 February 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/043404**

| Patent document cited in search report | | | Publication date (day/month/year) | Patent family member(s) | | | Publication date (day/month/year) |
|---|---|---|---|---|---|---|---|
| JP | 2022-187941 | A | 20 December 2022 | (Family: none) | | | |
| WO | 2023/140000 | A1 | 27 July 2023 | CN | 118511057 | A | |
| JP | 2013-44606 | A | 04 March 2013 | (Family: none) | | | |
| US | 2015/0130450 | A1 | 14 May 2015 | WO | 2013/164361 | A1 | |
| | | | | EP | 2844955 | A1 | |
| | | | | DE | 102012008888 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024060973 A
- JP 2024030971 W
- JP 6226811 B
- JP 5730809 B
- JP 2024014598 A